# EUROPEAN PATENT SPECIFICATION

(11) **EP 1 992 655 B1**
(45) Date of publication and mention of the grant of the patent: **28.12.2011**
(21) Application number: 06822769.3
(22) Date of filing: 01.11.2006
(51) Int. Cl.: C08G 65/38, C08G 59/24, C08G 59/00

(54) **METHOD OF PRODUCING PHENOL RESIN AND METHOD OF PRODUCING EPOXY RESIN**
VERFAHREN ZUR HERSTELLUNG VON PHENOLHARZ UND VERFAHREN ZUR HERSTELLUNG VON EPOXIDHARZ
PROCEDE DESTINE A PRODUIRE UNE RESINE PHENOLIQUE ET PROCEDE DESTINE A PRODUIRE UNE RESINE EPOXY

(30) Priority: 28.02.2006 JP 2006052537; 29.03.2006 JP 2006090758
(43) Date of publication of application: 19.11.2008
(73) Proprietor: DIC Corporation, Tokyo 174-8520 (JP)
(72) Inventor: ARITA, Kazuo, Ichihara-shi, Chiba 290-8585 (JP); OGURA, Ichirou, Ichihara-shi, Chiba 290-8585 (JP); MORINAGA, Kunihiro, Ichihara-shi, Chiba 290-8585 (JP)
(74) Representative: Adam, Holger
(86) International application number: PCT/JP2006/321840
(87) International publication number: WO 2007/099670

(56) References cited:
- EP-A2- 0 467 826
- DE-A1- 2 237 762
- JP-A- 04 236 223
- JP-A- 06 313 025
- JP-A- 60 025 946
- JP-A- 2003 335 718
- JP-A- 2004 027 000
- JP-A- 2004 059 714

## Description

### TECHNICAL FIELD

The present invention is related to a simple method of producing a phenol resin having a polyarylene ether structure and a method of producing epoxy resin used the phenol resin as a raw material.

### BACKGROUND ART

An epoxy resin or a phenol resin has been widely used in the field of electronics because an epoxy resin has a low shrinking property at the time of curing and a cured article thereof has excellent dimensional stability, electrical insulating properties and chemical resistance. However, for example, since there has been required reflow resistance accompanied with transition to surface mounting of a semiconductor, miniaturization of a semiconductor itself or a lead-free solder in the field of electronics such as a semiconductor encapsulating material and so on, much more heat impact resistance has been required for electronic component materials, and thus there has been demanded a material of a low melt viscosity in which fillers can be highly filled.

As an epoxy resin having low viscosity satisfying such required properties, for example, there have been known epoxy resin compositions based on a diglycidylether of dihydroxy tri(phenylene ether) (refer to Reference 1 described below).

However, dihydroxy tri(phenylene ether) which was precursor of the diglycidyl ether, is usually much difficultly produced in industry. That is to say, polyarylene ether is usually produced by reacting dihydroxybenzene in the presence of an acid catalyst. However, when dihydroxybenzene reacts a dehydration-condensation reaction in the presence of such an acid catalyst, the high molecular weight polyphenylene ether with a number average molecular weight (Mn) of 5000-25000 is usually produced. The product is difficult to be used as an encapsulating material of electronic components or printed circuit board materials because of a high softening point and high melt viscosity. Therefore, it need selectively separate the low molecular weight polymer from the high molecular weight product, or has to depend on multistep syntheses means in laboratory level, in order to produce dihydroxy tri(phenylene ether). It is difficult to apply the method to industrial production.

On the other hand, in the above electronics field, recently, since it has been inevitable to respond to environmental problems represented by a dioxin problem and there has been highly demanded a so-called halogen-free flame-retardant system in which a resin itself has a flame retarding effect without using a halogen-type flame retardant in additives. The polyphenylene ether is excellent as a synthetic resin to satisfy the above requirement. However, as mentioned above, it is difficult to apply the polyphenylene ether to the electronic field, in which high fluidity of materials is usually required, because a high molecular weight product is yielded during the production of the polyphenylene ether. From such a viewpoint, for example, a method (for example, patent literature 2) is proposed to made molecular weight lower by reacting polyarylene ether having high molecular weight with one-functioned phenol.

The modified polyarylene ether obtained by the method of making molecular weight lower can realize some molecular weight reduction, and can be use as a varnish composition combining with solvent, however, when it is used as a melt molding material for an encapsulating material of an electronic component, curing time is extremely slow and a practical cured article can not be obtained because it has not a fluidity at the molding temperature range (for example from 150 to 200°C).
Patent Document 1: Japanese Patent Application Laying-Open Publication No. Hei 6-313025.
Patent Document 2: Japanese Patent Application Laying-Open Publication No. Hei 2003-160662

### DISCLOSURE OF THE INVENTION

It is an object of the present invention to provide a method of producing a phenol resin, and as well as a method to produce epoxy resin from the phenol resin obtained by the method thereof. Using the method of producing a phenol resin, polyarylene ether having low melt viscosity can be industrially produced by extremely simple and easy method, without special aftertreatment after polymerization or complicated multistep reaction.

From the results of careful studies in order to solve the above subject, the present inventors found that in the product yielded by dehydration and condensation reaction of a polyvalent hydroxyl aromatic compound in the presence of a basic catalysis, instead of a high molecular weight compound, a compound with low melt viscosity was selectively obtained, so as to achieve the present invention.

That it, the present invention relates to a method of producing a phenol resin having polyarylene ether structure, which includes a step of reacting polyvalent hydroxyaromatic compound (A) having two or more phenolic hydroxyl groups per molecule in the presence of a basic catalyst (B) by dehydration condensation reaction.

Further, the present invention relates to a method of producing a epoxy resin having polyarylene ether structure, which includes a step of reacting the phenol resin obtained by the above-mentioned method, with a (methyl)epihalohydrin.

According to the present invention, the method of producing a phenol resin which can be used to produce polyarylene ether having a low melt viscosity by extremely simple and easy method industrially without special aftertreatment or complicated multistep reaction after polymerization, and the method of producing epoxy resin from the phenol resin obtained by the above method, can be provided.

### BRIEF DESCRIPTION OF THE DRAWINGS

FIG. 1 is a GPC chart of the phenol resin obtained in Example 1.
FIG 2 is a FT-IR chart of the phenol resin obtained in Example 1.
FIG 3 is the mass spectrum of the phenol resin obtained in Example 1.
FIG 4 is the mass spectrum by the trimethylsilylation method of the phenol resin obtained in Example 1.
FIG. 5 is a GPC chart of the phenol resin obtained in Example 2.
FIG 6 is a GPC chart of the phenol resin obtained in Example 3.

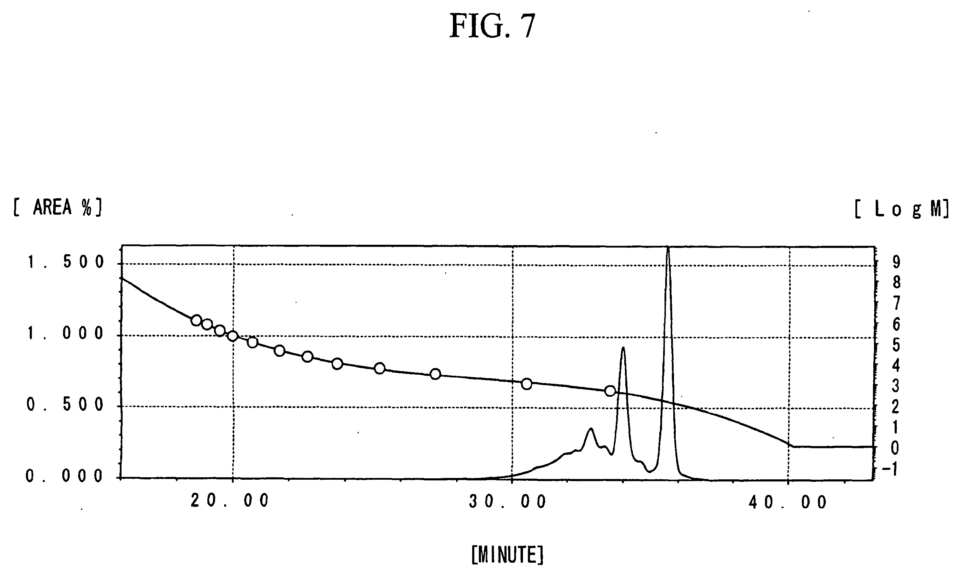

FIG 7 is a GPC chart of the phenol resin obtained in Example 4.

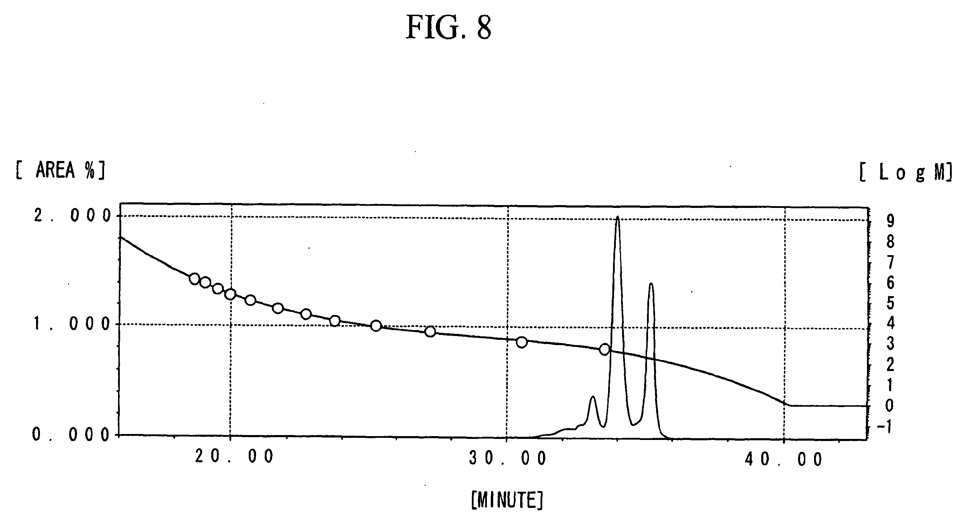

FIG 8 is a GPC chart of the phenol resin obtained in Example 5.

### BEST MODE FOR CARRYING OUT THE INVENTION

The polyvalent hydroxyaromatic compound (A) having two phenolic hydroxyl group or more per molecule in the method of the present invention, is selected from the group consisting of 1,3-dihydroxynaphthalene, 1,6-dihydroxynaphthalene, 1,8-dihydroxynaphthalene, or 2,7-dihydroxynaphthalene, 1,3-dihydroxybenzene or 5-phenyl-1,3-dihydroxybenzene, 1,2,3-trihydroxybenzene, or 1,3,6- trihydroxybenzene.

In addition, a dihydroxynaphthalene (a1) or a dihydroxybenzene (a2) is preferable because that the resulted phenol resin or the epoxy resin obtained from the phenol resin has lower melt viscosity. A dihydroxynaphthalene(al) such as 1,6-dihydroxynaphthalene or 2,7-dihydroxynaphthalene is particularly preferable from the aspect of flame retardancy, and 2,7-dihydroxynaphthalene is more preferable in that the epoxy resin obtained from 2,7-dihydroxynaphthalene has balance between flame retardancy and fluidity.
In addition, in the method of the present invention, it is preferable that the polyvalent hydroxyaromatic compound (A) having two phenolic hydroxyl group or more per phenolic hydroxyl may be mixture of a dihydroxynaphthalene (a1 and a dihydroxybenzene (a2).

The basic catalyst (B) used as a reaction catalyst in the method of the present invention may be specifically a alkaline metal hydroxide such as sodium hydroxide, or potassium hydroxide, alkaline metal carbonates such as sodium carbonate, or potassium carbonate, or phosphorous-based compounds such as triphenyl phosphine. These basic catalysts (B) may be used individually or in combination of 2 or more kinds thereof.

The amount of the above basic catalyst (B) to be used may be properly selected according to a kind of the basic catalyst, a targeted reaction rate. For example, when alkaline metal hydroxide is used, the amount is 0.01 to 0.5 mol, and preferably 0.01 to 0.1 mol per mole of phenol hydroxyl group of the difunctional phenols (a).

What is particularly described herein is that, when the difunctional phenols are changed to polyethers, an acid catalyst such as para-toluenesulfonic acid or methanesulfonic acid has been conventionally used, but in this case, a degree of polymerization cannot be controlled, thus resulting in a very high melting point or a high molecular weight product which may not melt until the decomposition point, and therefore, application to electronic component materials requiring high fluidity was difficult. Regarding this, by using a basic catalyst as a reaction catalyst in the present invention, the phenol resin having the total number of nuclei of from 2 to 8 and preferably 3 to 6 is obtained surprisingly while the reaction product is not subject to having a high molecular weight. Accordingly, the epoxy resin of the present invention is to be a material having excellent flame retardancy as well as high fluidity.

The reaction may be carried out solvent-free or under a soluble solvent which can form a homogeneous solution, according to properties of the polyvalent hydroxyaromatic compound (A) to be used. It is preferable to carried out the reaction solvent-free, because a solvent recovery process is not needed. It is more preferable to carry out the reaction in the solvent in order to stably perform the reaction.

As the above soluble solvent, examples thereof may be alcohols such as benzyl alcohol, cyclohexanol, or amyl alcohol; ethyleneglycols such as ethylene glycol, diethyleneglycol, triethyleneglycol, or polyethyleneglycol; monoethers or diethers of ethyleneglycol or diethyleneglycol, such as ethyleneglycol monomethylether, ethyleneglycol monoethylether, ethyleneglycol monopropyether, diethyleneglycol monomethylether, diethyleneglycol monoethylether, diethyleneglycol monopropyether, diethyleneglycol monobutylether, ethyleneglycol dimethylether, ethyleneglycol diethyl ether, ethyleneglycol dipropyether, diethyleneglycoldimethyl ether, diethyleneglycol diethylether, or diethyleneglycol dipropyether; chlorobenzene; or nitrobenzene. These organic solvents may be used individually or in combination of 2 or more kinds thereof. By using these soluble solvents, precipitation of a polyvalent hydroxyaromatic compound (A) can be prevented so as to stably obtain the phenol resin.

In the reaction, the basic catalyst (B) in the a polyvalent hydroxyaromatic compound (A) is dissolved solvent-free or under the soluble solvent and the reaction can be carried out at a temperature condition of about 100 to 300°C and preferably 150 to 250°C. The reaction time is not particularly limited but is preferred to be in a range in which the temperature condition can be maintained for 1 to 10 hours. In the reaction, it is preferable to distill off water produced during the reaction out of the system by using a fractional distillation column and so on, which makes the reaction proceed rapidly so as to enhance productivity.

When the obtained phenol resin is strongly colored, an antioxidant or reducing agent may be added. The antioxidant may be, for example, hindered phenol-type compounds such as 2,6-dialkylphenol derivatives, 2-valent sulfur-based compounds, or 3-valent phosphorous atom-containing phosphorous acid ester-type compounds. The reducing agent may be, for example, hypophosphorous acid, phosphorous acid, thiosulfuric acid, sulfurous acid, hydrosulfurous acid salts, or salts thereof.

After the termination of the reaction, the reaction product may be solidified itself to be taken out, or subsequently subject to the glycidylation reaction by adding epihalohydrin. Or, the catalyst may be removed by neutralization treatment, washing treatment or decomposition and then the phenol resin can be separated by general operations such as extraction, or distillation. The neutralization treatment or washing treatment can be performed according to general methods, and, for example, an acidic material such as hydrochloric acid, oxalic acid, acetic acid, sodium phosphate monobasic, or carbonic acid gas may be used.

The phenol resin thus-obtained, which has polyarylene ether structure, may be used as being a mixture of a plurality of kinds thereof in various applications, but, if necessary, the content of the unreacted polyvalent hydroxyaromatic compound (A) may be reduced by further performing a separating operation such as distillation, column treatment, or alkaline aqueous solution extraction, and each product may be isolated as a single component.

The phenol resin obtained by the above-mentioned method is, for example, the compound having a structure in which an arylene structure is bonded with another arylene structure through an oxygen atom, the total number of aromatic nuclei forming the arylene structures per molecule is from 2 to 8 and the aromatic nuclei have a phenol hydroxyl group as a substituent.

Since the phenol resin has a polyaryleneoxy structure in which the arylene structure in the molecule of the phenol resin is bonded with another arylene structure through an oxygen atom therefore, char formation at the combustion of the cured article is accelerated so as to manifest excellent flame retardancy as well as good heat resistance of the cured article. The total number of aromatic nuclei per molecule is from 2 to 8 and preferably from 3 to 6, which results in excellent fluidity as well.

In addition, the arylene group forming the phenol resin, may be a naphthylene group or a phenylene group, or may be a naphthylene group or a phenylene group which each may have a phenyl group or an C₁₋₄ alkyl group such as a methyl group, an ethyl group, a propyl group, or a t-butyl group as a substituent, from the aspect of flame retardancy. From the aspect of flame retardancy, naphthalene or phenylene group is preferable, and naphthalene is more preferable.

Therefore, it is preferable that the phenol resin is the compound having a structure in which an naphthalene structure is bonded with another arylene structure through an oxygen atom, the total number of aromatic nuclei forming naphthalene structure and the arylene structures per molecule is from 2 to 8 and the aromatic nuclei have a phenol hydroxyl group as a substituent.

Here, the naphthalene structure forming the phenol resin, may be a naphthalene structure having from 2 to 3 bonding positions to an oxy group, it is preferable to have 2 bonding positions to an oxy group, specifically in which the position of bonding to an oxy group is preferably 1,3-position, 1,6-position, 1,7-position, 1,8-position, 2,3-position, or 2,7-position, from the aspect of fluidity of the phenol resin.

Among these, 1,6-position and 2,7-position is preferable from the aspect of an easiness for production, and 2,7-position is more preferable from the aspect of an excellent balance between fluidity and flame retardancy. Further, regarding a substituent other than the oxy group on aromatic nuclei, it is preferable that the naphthalene structure has no such substituent or has a methyl group or a phenyl group substituent, and particularly it is preferable that the naphthalene structure has no such substituent from the aspect of flame retardancy.

The phenol resin may form a molecular structure in which a plurality of polyarylene structures forms a direct bonding.

Meanwhile, in the phenol resin, the other arylene structure bonded with the naphthalene structure through an oxygen atom may be the naphthalene structure or phenylene structure. Here, the phenylene structure may be a compound having 2 or 3 bonding positions to an oxy group, and may have an C₁₋₄ alkyl group such as a methyl group, an ethyl group, a propyl group, or a t-butyl group, or a phenyl group on the aromatic rings thereof, like the naphthalene structure. However, from the aspect of fluidity of the phenol resin, the phenylene structure having 2 bonding positions to an oxy group is preferable, in which the position of bonding to an oxy group may be preferably 1,3-position, 1,4-position or 1,5-position, however, 1,3-position is preferable from the aspect of an easiness of production. Further, regarding a substituent on the aromatic nucleus of the another arylene structure, it is preferable that the arylene structure has no such substituent or has a methyl group or phenyl group substituent, and particularly preferred that the arylene structure has no such substituent, particularly from the aspect of flame retardancy. It is provided that such another arylene structure is preferably the above-described naphthalene structure, from the aspect of flame retardancy.

Specifically, this phenol resin is preferably a structure represented by the following general formula (1) from the aspect of flame retardancy.

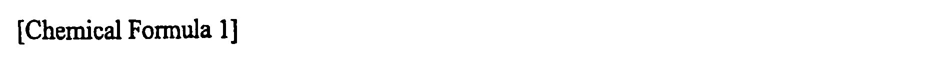

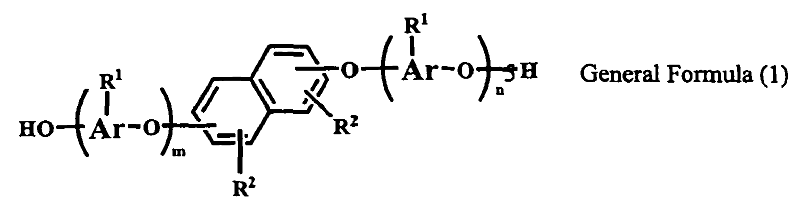

In the general formula (1), each Ar represents independently a naphthylene group, a phenylene group, or a naphthylene group or a phenylene group having an C₁₋₄ alkyl group or a phenyl group as a substituent; each R² represents independently a hydrogen atom or an C₁₋₄ alkyl group; n and m each represent an integer of from 0 to 2, and at least one of n and m is 1 or greater; R¹ represents a hydrogen atom or an aromatic hydrocarbon group containing an hydroxyl group, which is represented by the following general formula (1-2). Provided that the total number of aromatic nuclei in the formula (1) is from 2 to 8; and in the general formula (1), a position of bonding to the naphthalene structure part may be any of two benzene rings forming the naphthalene structure part.

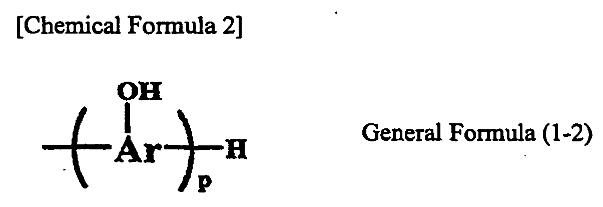

In the general formula (1-2), each Ar represents independently a naphthylene group, a phenylene group, or a naphthylene group or a phenylene group having an C₁₋₄ alkyl group or a phenyl group as a substituent; and p represents an integer of 1 or 2.

In the phenol resin represented by the general formula (1), as described above, the position of bonding to an oxy group in the naphthalene structure is preferably 1,6-position or 2,7-position, and, when the another arylene structure is the phenylene group, the position of bonding to an oxy group in the phenylene structure is preferably 1,3-position, and in the general formula (1), R² is preferably a hydrogen atom. Accordingly, the phenol resin is preferably compounds represented by the following structural formula P-1 to P-17 in which the position of bonding to an oxy group in the naphthalene structure is 1,6-position.

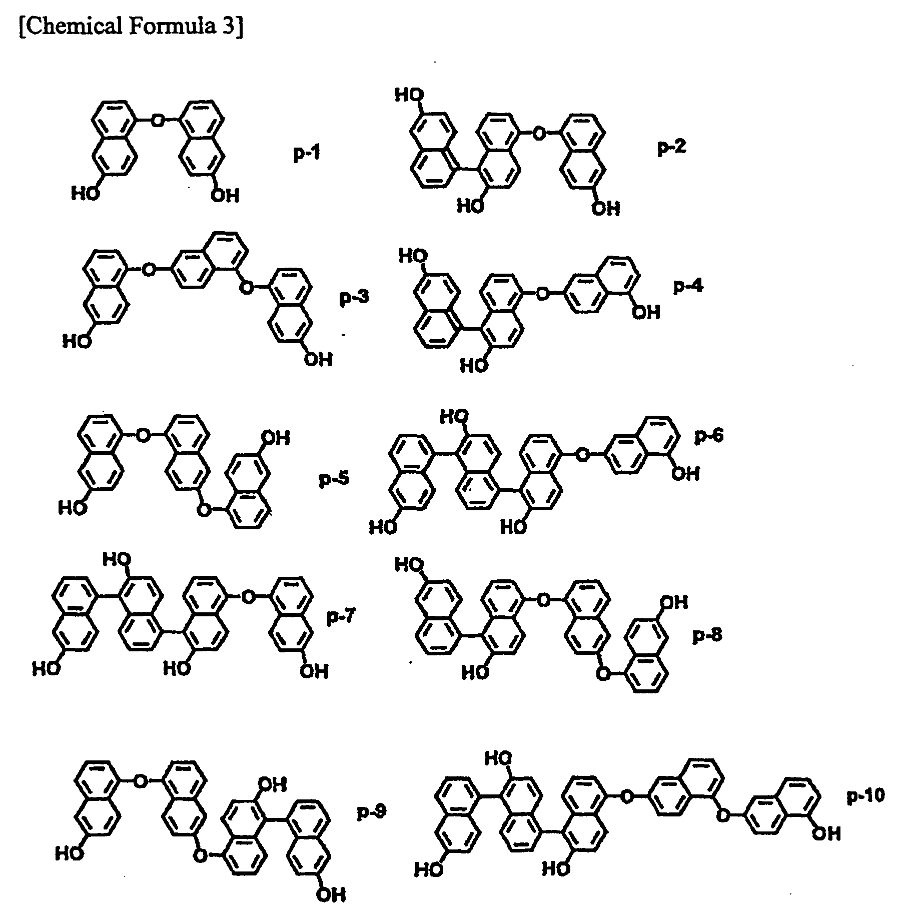

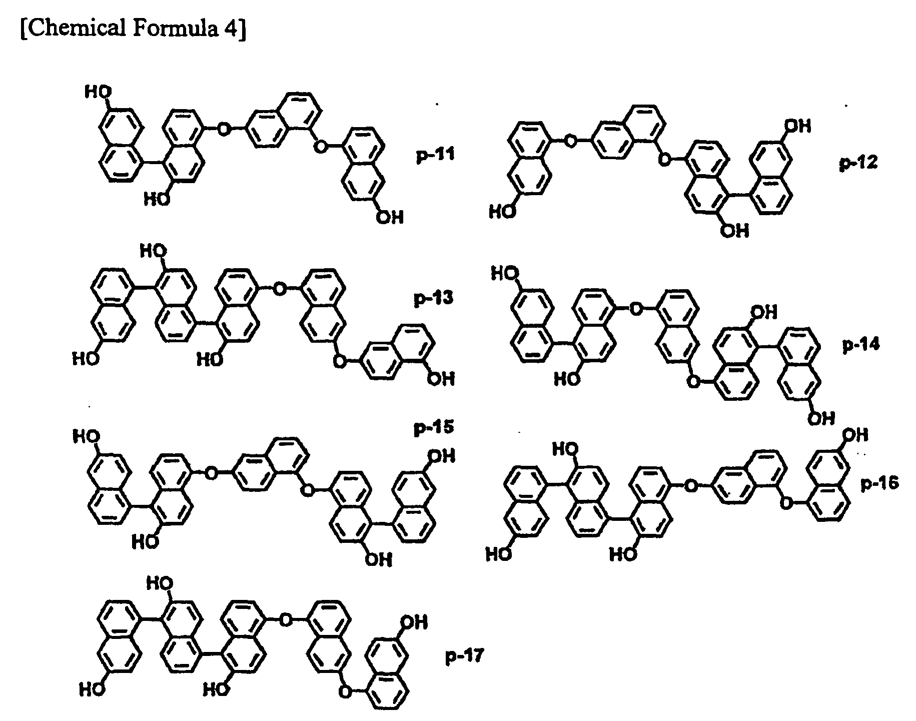

Next, for example, the phenol resin in which the position of bonding to an oxy group is 2,7-position may be compounds represented by the following structural formulas P-18 to P-25.

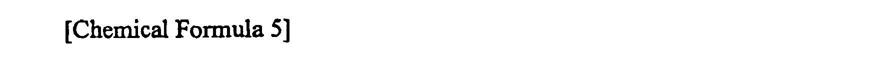

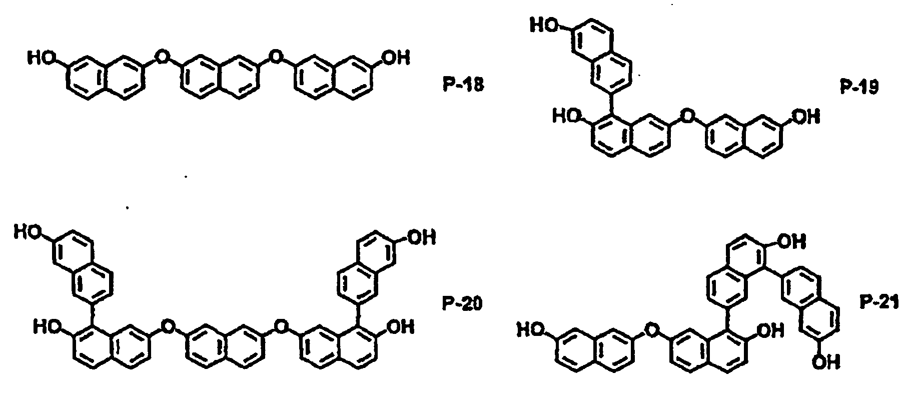

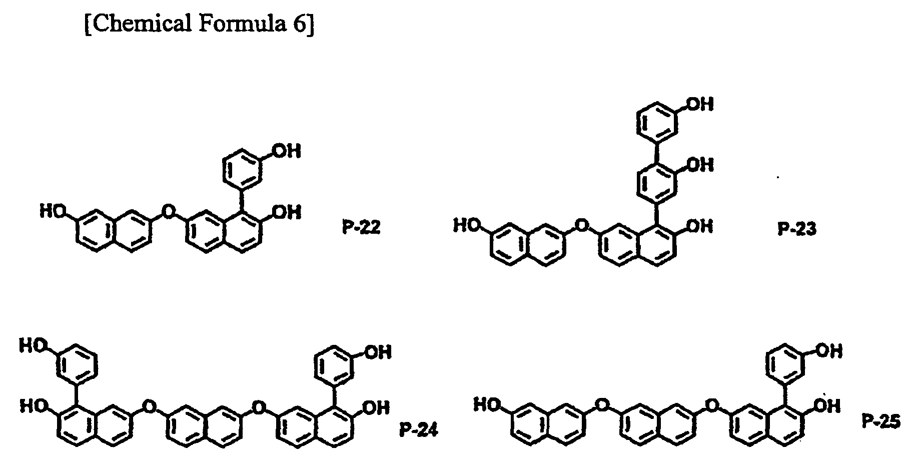

The phenol resin may be used individually as each of the compounds, or as a mixture of a plurality of the compounds.

As described above, it is preferable that the phenol resin specifically described above has a structure in which a naphthalene structure is bonded with another naphthalene structure through an oxygen atom since the cured article thereof has much better flame retardancy as well as better heat resistance. Specifically, this phenol resin may be represented by, for example, the following general formula (2).

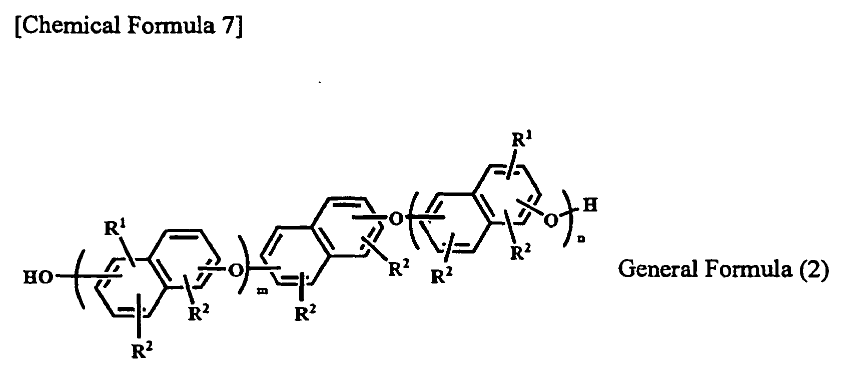

In the general formula (2), each R² represents independently a hydrogen atom or an C₁₋₄ alkyl group; n and m each represent an integer of from 0 to 2, and at least one of n and m is 1 or greater; R¹ represents a hydrogen atom or the following general formula (2-2):

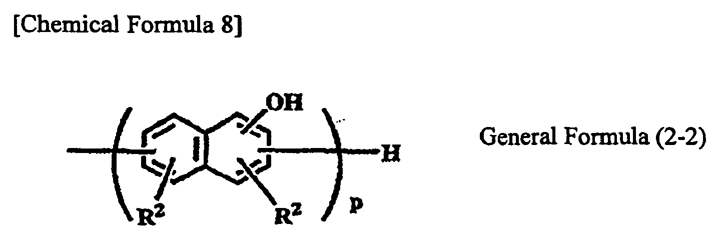

In the general formula (2-2) each R² represents independently a hydrogen atom or an C₁₋₄ alkyl group; p represents an integer of 1 or 2. Provided that the total number of aromatic nuclei in the formula (2) is from 2 to 8; and in the general formula (2), a position of bonding to the naphthalene structure part may be any of two benzene rings forming the naphthalene structure part.

In the above general formula (2), R² is preferably a hydrogen atom, and specific examples thereof may be compounds of the above structural formula P-1 to P-21.

Since the phenol resin thus-obtained is commonly obtained as a mixture of compounds of each structure as described above, the phenol resin in the present invention may be used as being such a mixture. Moreover, the reaction product contains difunctional phenols which are a raw component. Therefore, the phenol resin of the present invention may be used as a mixture containing this raw component. The content of the difunctional phenols in the mixture is preferably 5 to 80% as an area ratio in the measurement by GPC, from the aspect of fluidity of the epoxy resin composition.

The phenol resin specifically described above is preferred in which an hydroxyl equivalent in the mixture is in a range of 50 to 350g/eq. in that the obtained phenol resin has good fluidity, the epoxy resin composition excellent can be obtained by curability and the cured article which is molded has excellent heat resistance.

The phenol resin may be used as a curing agent for the epoxy resin, or may be used as raw material for producing epoxy resin.

The curing agents for the epoxy resin can be combined with the another curing agents such as amine-based compounds, amide-based compounds, acid anhydride-based compounds, multivalent phenol compounds such as aminotriazine-modified phenol resins (multivalent phenol compounds in which phenol nuclei are connected with melamine or benzoguanamine).

The epoxy resin for which the phenol resin is used as a curative agent, for examples, may be bisphenol A type epoxy resin, bisphenol F type epoxy resin, biphenyl type epoxy resin, tetramethyl biphenyl type epoxy resin, phenol novolac type epoxy resin, cresol novolac type epoxy resin, bisphenol A novolac type epoxy resin, triphenylmethane type epoxy resin, tetraphenylethane type epoxy resin, dicyclopentadiene-phenol addition reaction type epoxy resin, phenolaralkyl type epoxy resin, naphthol-novolac type epoxy resin, naphtholaralkyl type epoxy resin, naphthol-phenol co-condensed novolac type epoxy resin, naphthol-cresol co-condensed novolac type epoxy resin, aromatic hydrocarbon formaldehyde resin-modified phenol resin type epoxy resin, or biphenyl novolac type epoxy resin. These epoxy resins may be used individually or in a mixture of 2 or more thereof.

Among these epoxy resins, the biphenyl type epoxy resin, naphthalene type epoxy resin, phenolaralkyl type epoxy resin, biphenyl novolac type epoxy resin or xanthene type epoxy resin are preferred from the aspect of excellent flame retardancy and dielectric property.

In addition, optionally, a curing accelerator may be properly combined. As such a curing accelerator, there may be used various kinds thereof, and examples of such a curing accelerator may be phosphor-based compounds, tertiary amines, imidazoles, organic acid metal salts, Lewis acids, or amine complex salts. When used for a semiconductor-encapsulating material, the curing accelerator is preferably a phosphorous-based compound such as triphenyl phosphine, or a tertiary amine such as 1,8-bicyclo-[5.4.0]-undecene (DBU) from the aspect of excellence in curability, heat resistance, electrical properties, reliability in humidity resistance, etc.

On the other hand, when the phenol resin is used as raw material for producing epoxy resin, the targeted epoxy resin can be produced by the method of producing an epoxy resin of the present invention, which is explained in detail below.

The method of the present invention for producing epoxy resin includes a process of reacting the phenol resin having a polyarylene structure, which is obtained by the above-mentioned method, with (methyl)epihalohydrins. Specifically, it may be a method in which the phenol resin and the (methyl)epihalohydrins are reacted in the presence of a basic catalyst. Here, an introducing ratio of the phenol resin and the (methyl)epihalohydrins is preferably 2 to 10 moles of the (methyl)epihalohydrins per mole of aromatic hydroxyl group in the phenol resin, and an amount of the basic catalyst to be used is preferably in a range of 0.9 to 2.0 moles per mole of aromatic hydroxyl group in the phenol resin, from the aspect of reactivity or easiness for purification after the termination of the reaction. As a specific reaction method, there may be mentioned by a method in which the phenol resin and the (methyl)epihalohydrins are introduced into a reaction vessel in a predetermined ratio and reacted in a temperature range of 20 to 120°C for 0.5 to 10 hours while adding the basic catalyst all at once or slowly.

The basic catalyst used herein may be used as a solid form or as an aqueous solution thereof. When the basic catalyst is used as an aqueous solution thereof, a method may be employed in which the solution is continuously added while water and the (methyl)epihalohydrins are continuously distilled off from the reaction mixture under a reduced pressure or atmospheric pressure and then water is separated and removed and the (methyl)epihalohydrins are continuously recycled into the reaction mixture.

The (methyl)epihalohydrins may be, for example, epichlorohydrin, epibromohydrin, or β-methylepichlorohydrin, and among these, epichlorohydrin is preferred from the aspect of easiness for commercial acquisition. When performing the commercial production, it is preferable that, in the reactions in the next and later batches after the termination of the reaction in the first batch for the epoxy resin production, the (methyl)epihalohydrins recycled from the crude reaction product are used in combination with fresh (methyl)epihalohydrins corresponding to an amount of the decreased (methyl)epihalohydrins as the (methyl)epihalohydrins are consumed in the reaction.

The basic catalyst may be, for example, alkaline earth metal hydroxides, alkaline metal carbonates, or alkaline metal hydroxides. Particularly, alkaline metal hydroxides are preferable from the aspect of excellent activity in the synthetic reaction of the epoxy resin, and, for example, sodium hydroxide, orpotassium hydroxide may be mentioned. In the use thereof, these basic catalysts may be used as in an aqueous solution of about 10 to 55 weight% or as in a solid form. A reaction rate in the synthesis of the epoxy resin can be accelerated by using an organic solvent in combination. This organic solvent is not particularly limited but may be, for example, ketones such as acetone, or methyl ethyl ketone, alcohols such as methanol, ethanol, 1-propy alcohol, isopropyl alcohol, 1-butanol, sec-butanol, or tert-butanol, cellosolves such as methyl cellosolve, or ethyl cellosolve, ethers such as tetrahydrofuran, 1,4-dioxan, 1,3-dioxan, or diethoxyethane, aprotic polar solvents such as acetonitrile, dimethylsulfoxide, or dimethylformamide. These organic solvents may be used individually, or in a combination of suitable 2 or more kinds thereof in order to control polarity.

After washing the reaction product from the epoxidation reaction as described above, the unreacted epihalohydrin or the combined organic solvent is removed by distillation. In order to obtain the epoxy resin having a low content of hydrolyzable halogens, the obtained epoxy resin is again subjected to the reaction by dissolved the obtained epoxy resin in an organic solvent such as toluene, methyl iso-butyl ketone, or methyl ethyl ketone, and added with an aqueous solution of an alkaline metal hydroxide such as sodium hydroxide, or potassium hydroxide. In this case, a phase transfer catalyst such as quaternary ammonium salts, or crown ethers may be present. When the phase transfer catalyst is used, its amount to be used is preferably in a range of 0.1 to 3.0 weight% with respect to the epoxy resin to be used. After the termination of the reaction, the produced salt is removed by filtration, or washing, and again, the solvent such as toluene, or methyl iso-butyl ketone is distilled off, and thereby, the epoxy resin of high purity can be obtained.

As described above, the epoxy resin obtained has as a main skeleton which is a structure having an aryleneoxy structure in which a arylene structure is bonded with another arylene structure through an oxygen atom and the total number of aromatic nuclei forming the arylene structure and the arylene structure per molecule is from 2 to 8. Since the arylene oxy structure is formed in a cured article, char formation is accelerated during combustion of the cured article and then generates excellent flame retardancy. Meanwhile, since the total number of aromatic nuclei is from 2 to 8 per molecule, the epoxy resin also has excellent fluidity.

Meanwhile, the arylene group froming the expoxy resin, may be naphthylene group or phenylene group, or naphthylene group or phenylene group having an C₁₋₄ alkyl group such as a methyl group, an ethyl group, a propyl group, or a t-butyl group or a phenyl group. From the aspect of flame retardancy, naphthylene group or phenylene group is preferable, and naphthylene group is more preferable.

Therefore, it is preferable that the epoxy resin has a structure in which a naphthalene structure is bonded with an arylene structure through an oxygen atom and the total number of aromatic nuclei forming the naphthalene structure and the arylene structure per molecule is from 2 to 8. It is more preferable that the epoxy resin has a structure which is substituted by a (meta) glycidyoxy group in the aromatic nucleus.

Here, the naphthalene structure forming the epoxy resin may be a naphthalene structure having from 2 to 3 bonding positions to an oxy group. However, from the aspect of fluidity of the epoxy resin, the naphthalene structure preferably has 2 bonding positions to an oxy group, in which the bonding position of oxy group is preferably 1,3-position, 1,6-position, 1,7-position, 1,8-position, 2,3-position, or 2,7-position. Among these, 1,6-position and 2,7-position are preferable from the aspect of an easiness for production, and 2,7-position is more preferable from the aspect of an excellent balance between fluidity and flame retardancy.

The epoxy resin may form a molecular structure in which a plurality of arylene structures is bonded by a direct bonding.

Meanwhile, in the epoxy resin, the other arylene structure bonded with the naphthalene structure through an oxygen atom may be the above-described naphthalene structure and phenylene structure. Here, the phenylene structure may have 2 or 3 bonding positions to an oxy group, or may have an C₁₋₄ alkyl group such as a methyl group, an ethyl group, a propyl group, or a t-butyl group or a phenyl group on aromatic nucleus thereof. However, from the aspect of fluidity of the epoxy resin, the phenylene structure having 2 bonding positions to an oxy group is preferable, in which the bonding position of oxy group may be preferably 1,3-position, 1,4-position or 1,5-position. Among these, 1,3-position is more preferable from the aspect of an easiness for the production. Besides, regarding a substituent on the aromatic nucleus of the another arylene structure, it is preferable that the arylene structure has no such a substituent or has a methyl group, and particularly preferred that the arylene structure has no such a substituent, from the aspect of flame retardant effect. Particularly, the other arylene structure is preferably the above-described naphthylene group, from the aspect of flame retardancy.

A (methyl)glycidyloxy group in the molecular structure of the epoxy resin is specifically a glycidyloxy group or a β-methylglycidyloxy group, but in the present invention, a glycidyloxy group is particularly preferable from aspects of flame retardancy of the cured article and easiness for obtaining a raw material in the commercial production and so on.

Specifically, this epoxy resin is preferably a structure represented by the following general formula (3) from the aspect of flame retardant effect.

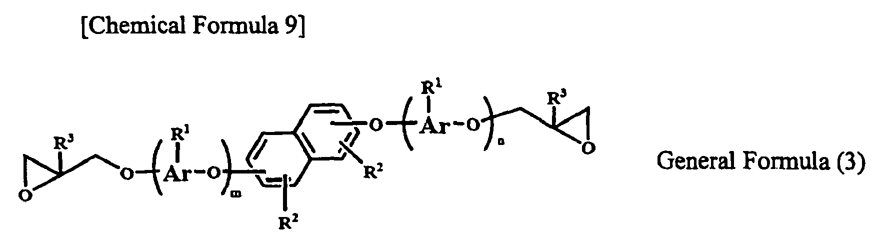

In formula (3), R³ represents a hydrogen atom or a methyl group; each Ar represents independently a naphthylene group, a phenylene group, or a naphthylene group or a phenylene group having an C₁₋₄ alkyl group or a phenyl group as a substituent; each R² represents independently a hydrogen atom or an C₁₋₄ alkyl group; n and m each represent an integer of from 0 to 2, and at least one of n and m is 1 or greater; R¹ represents a hydrogen atom or an aromatic hydrocarbon group containing an epoxy group represented by the following general formula (3-2), provided that the total number of the aromatic nuclei in the formula (3) is from 2 to 8, and in the above general formula (1), a position of bonding to the naphthalene skeleton may be any of two rings forming the naphthalene ring.

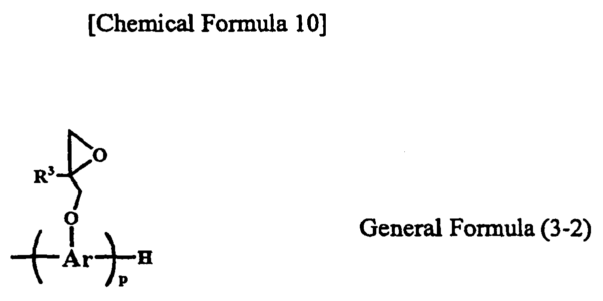

In the general formula (3-2), R³ represents a hydrogen atom or a methyl group; each Ar represents independently a naphthylene group, a phenylene group, or a naphthylene group or a phenylene group having an C₁₋₄ alkyl group or a phenyl group as a substituent; p represents an integer of 1 or 2.

In the epoxy resin represented by the general formula (3), as described above, the position of bonding to an oxy group in the naphthalene structure is preferably 1,6-position and 2,7-position, and, when the another arylene structure is a phenylene group, the position bonding to an oxy group in the arylene structure is preferably 1,3-position, and in the general formula (1), R² is preferably a hydrogen atom. Accordingly, the preferred a compound among the epoxy resin (A) may be, for example, an epoxy resin represented by the following structural formulas E-1 to E-17 in which the position bonding to an oxy group in the naphthalene structure is 1,6-position.

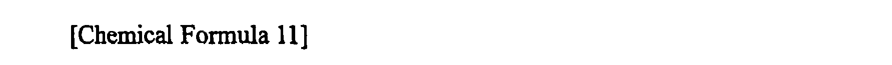

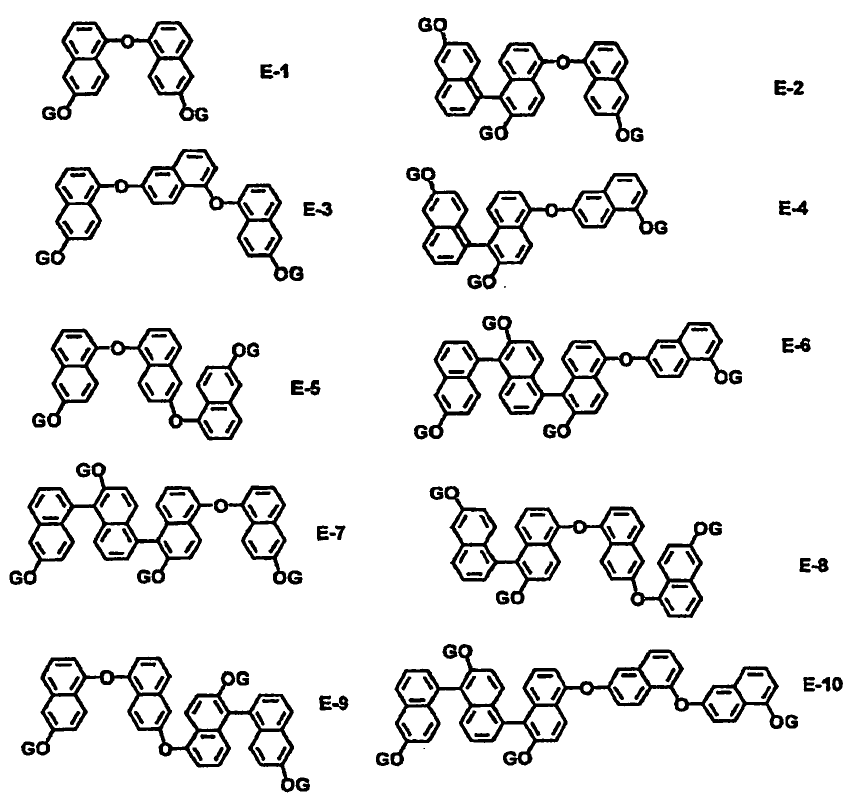

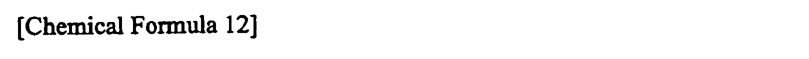

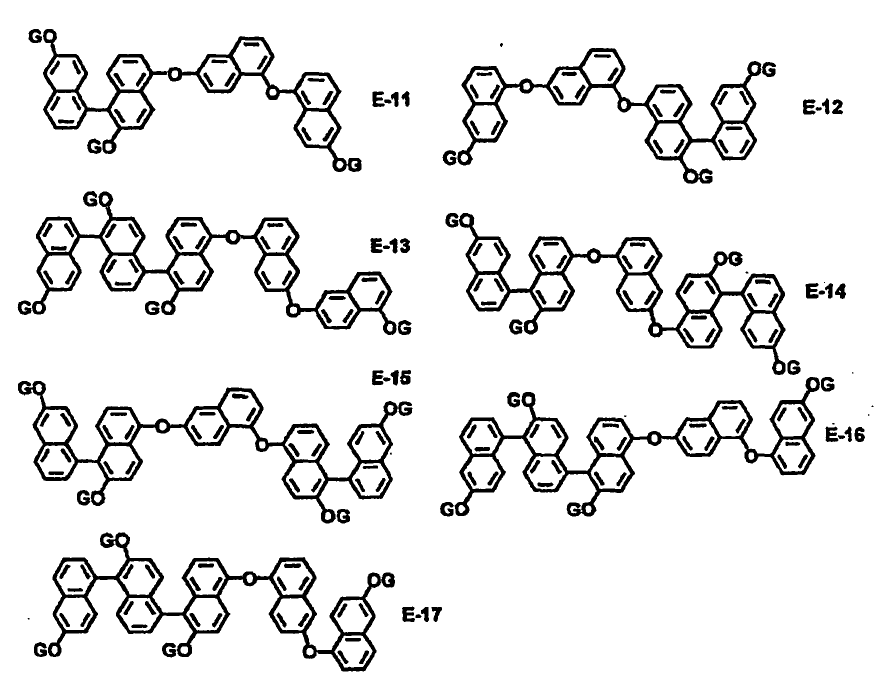

Next, for example, as the epoxy resin in which the position bonding to an oxy group is 2,7-position, those represented by the following structural formulas E-18 to E-25 may be mentioned:

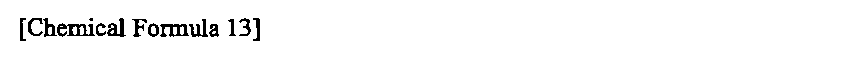

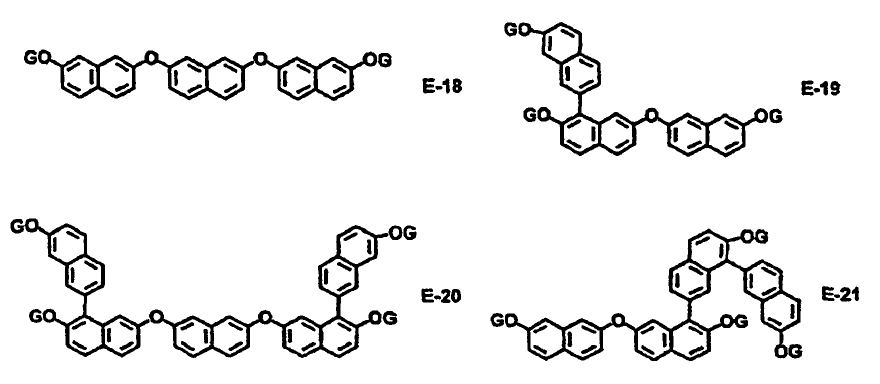

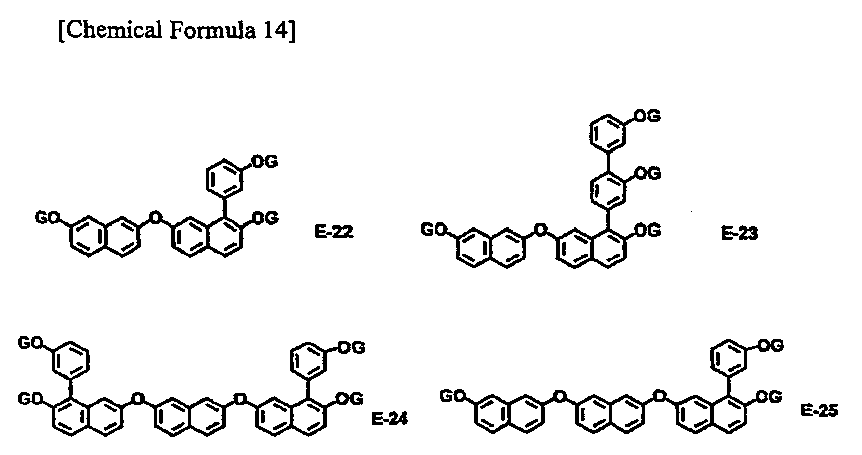

In the above structural formulas E-1 to E-25, "G" denotes a glycidyl group.

The epoxy resin may be used individually as each of the compounds, or as a mixture of a plurality of the compounds.

As described above, it is preferable that the epoxy resin has a structure in which a naphthalene structure is bonded with another naphthalene structure through an oxygen atom in that a cured article thereof has better flame retardancy as well as good heat resistance. Specifically, this epoxy resin may be represented by, for example, the following general formula (4).

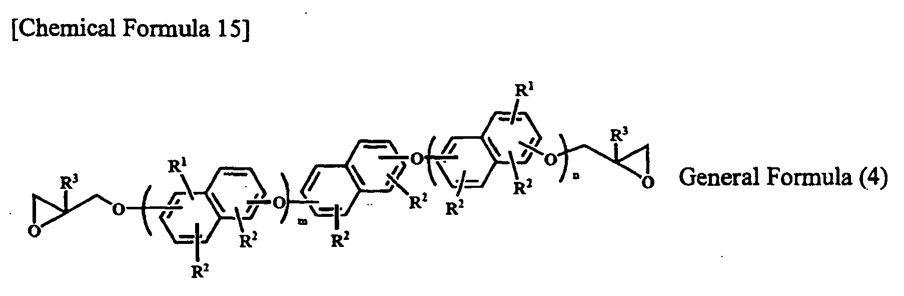

In the general formula (4), each R³ represents independently a hydrogen atom or a methyl group; each R² represents independently a hydrogen atom or an C₁₋₄ alkyl group; n and m each represent an integer of from 0 to 2, and at least one of n and m is 1 or greater; R¹ represents a hydrogen atom or the following general formula (4-2):

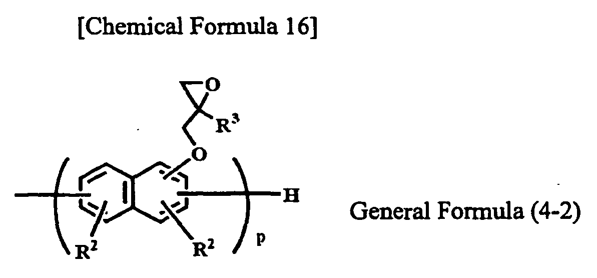

In the general formula (4-2), each R³ represents independently a hydrogen atom or a methyl group; each R² represents independently a hydrogen atom or an C₁₋₄ alkyl group; p represents an integer of 1 or 2. Provided that the total number of aromatic nuclei in the general formula (4) is from 2 to 8, and a position bonding to the naphthalene skeleton in the above general formula (4) may be any of two rings forming the naphthalene RING

Also in the above general formula (4), R² is preferably a hydrogen atom, and specific examples thereof may be compounds represented by above structural formula E-1 to E-21. Moreover, the compounds represented by the above structural formula E-18 to E-21 in which a position bonding to an oxy group is 2,7-position are preferred from the aspect of excellent flame retardancy and heat resistance, and particularly, it is preferable to use a mixture of the compounds represented by the structural formulas E-18, E-19 or E-20 from the aspect of an excellent balance between flame retardancy and fluidity. The total number of aromatic nuclei in the general formula (3) is particularly preferred to be 3 to 6 from the aspect of an excellent balance of flame retardancy, heat resistance and fluidity.

The epoxy resin described above can be obtained, for example, by reacting dihydroxynaphthalenes or a mixture of dihydroxynaphthalenes and dihydroxybenzenes (abbreviated as "difunctional phenols", below) in the presence of an acid catalyst to obtain a phenol resin, then, repeatedly extracting a low molecular weight product with an organic solvent, and then performing the glycidylation of the phenol resin. From the aspect of excellent productivity of the epoxy resin, it is preferable that the epoxy resin can be obtained in the presence of a basic catalyst then performing the glycidylation of the phenol resin.

Since the epoxy resin thus-obtained is commonly obtained as a mixture of the compounds of each structure as described above, the epoxy resin in the present invention may be used as being this mixture. Moreover, the reaction product contains a high molecular weight compound having a 2-hydroxypropylene group, which is produced by the reaction between an epoxy group and the phenol resin that is a precursor for the epoxy resin; or diglycidylethers of difunctional phenols which is a raw component. Therefore, the epoxy resin of the present invention may be used as being a mixture containing this high molecular weight compound or raw component in abbreviation, herein below). As described above, since the number of nuclei of the epoxy resin can be suppressed to be low in the present invention, it is preferable that the mixture is used as a mixture of the epoxy resin with the diglycidylethers of the difunctional phenols. The content of the diglycidylethers of the difunctional phenols in the mixture is preferably 5 to 80% as an area ratio in the measurement by GPC, from the aspect of fluidity of the epoxy resin composition.

The epoxy resin specifically described above is preferred in which an epoxy equivalent in the mixture is in a range of 100 to 400g/eq. since the obtained epoxy resin has good fluidity, the epoxy resin composition having excellent curability can be obtained and the cured article thereof has excellent heat resistance.

. A melt viscosity of the epoxy resin is preferably 5.0 to 0.1 mPa·s at 150°C in the mixture from the aspect of good fluidity of the obtained epoxy resin.

Next, the epoxy resin may be used individually, or may be used in combination with other epoxy resins as far as the effects of the present invention are not deteriorated.

As the other epoxy resins to be combined with, various epoxy resins may be used, and examples thereof may be bisphenol A type epoxy resin, bisphenol F type epoxy resin, biphenyl type epoxy resin, tetramethyl biphenyl type epoxy resin, phenol novolac type epoxy resin, cresol novolac type epoxy resin, triphenylmethane type epoxy resin, tetraphenylethane type epoxy resin, dicyclopentadiene-phenol addition reaction type epoxy resin, phenolaralkyl type epoxy resin, naphthol-novolac type epoxy resin, naphtholaralkyl type epoxy resin, naphthol-phenol co-condensed novolac type epoxy resin, naphthol-cresol co-condensed novolac type epoxy resin, aromatic hydrocarbon formaldehyde resin-modified phenol resin type epoxy resin, or biphenyl-modified novolac type epoxy resin. Among these epoxy resins, the tetramethyl biphenyl type epoxy resin, biphenylaralkyl type epoxy resin or novolac type epoxy resin are preferably used particularly in that the cured article having excellent flame retardancy can be obtained.

As the curing agent used in epoxy resin obtained by the method of the present invention, there may be used various kinds of known curing agents for epoxy resins, for example, curing agents such as amine-based compounds, amide-based compounds, acid anhydride-based compounds, or phenol-based compounds. Specifically, examples of the amine-based compounds may be diaminodiphenylmethane, diethylenetriamine, triethylenetetramine, diaminodiphenyl sulfone, isophoronediamine, imidazoles, BF₃-amine complexes, or guanidine derivatives, examples of the amide-based compounds may be dicyandiamide, or polyamide resin synthesized from a dimer of linolenic acid and ethylenedimaine, examples of the acid anhydride-based compounds may be phthalic anhydride, trimellitic anhydride, pyrotrimellitic anhydride, maleic anhydride, tetrahydrophthalic anhydride, methylhexahydrophthalic anhydride, methylnadic anhydride, hexahydro phthalic anhydride, or methyl hexahydro phthalic anhydride, examples of the phenol-based compounds may be multivalent phenol compounds such as phenol novolac resins, cresol novolac resins, aromatic hydrocarbon formaldehyde resin-modified phenol resins, dicyclopentadiene phenol adduct type resins, phenolaralkyl resins, naphtholaralkyl resins, trimethylolmethane resins, tetraphenylolethane resins, naphthol novolac resins, naphthol-phenol co-condensed novolac resins, naphthol-cresol co-condensed novolac resins, biphenyl-modified phenol resins (multivalent phenol compounds in which phenol nuclei are connected by bismethylene group), biphenyl-modified naphthol resins (multivalent naphthol compounds in which phenol nuclei are connected by bismethylene group), or aminotriazine-modified phenol resins (multivalent phenol compounds in which phenol nuclei are connected by melamine or benzoguanamine), or the phenol resin having a polyarylene structure, which is obtained by the method of the present invention.

Among these, particularly the compounds containing many aromatic skeletons in the molecule are preferable from the aspect of flame retardancy effect, and specifically, preferred are phenol novolac resins, cresol novolac resins, aromatic hydrocarbon formaldehyde resin-modified phenol resins, phenolaralkyl resins, naphtholaralkyl resins, naphthol novolac resins, naphthol-phenol co-condensed novolac resins, naphthol-cresol co-condensed novolac resins, biphenyl-modified phenol resins, biphenyl-modified naphthol resins, or aminotriazine-modified phenol resins, from the aspect of excellent flame retardancy.

In the epoxy composition made of phenol resin or epoxy resin having a polyarylene structure as essential components, which are obtained by the methods of the present invention, flame retardancy of the cured article becomes excellent even without combining flame retardants previously used in the art. However, in order to manifest much higher flame retardancy, for example, a non-halogen-based flame retardant which does not substantially contain halogen atoms may be combined in a range where moldability in a encapsulating process or reliability of semiconductor devices in the field of a semiconductor encapsulating material can be kept.

The epoxy resin composition combined with this non-halogen-based flame retardant does not substantially contain halogen atoms, but, for example, may contain halogen atoms of about at most 5000 ppm as trace impurity derived from the epihalohydrin contained in the epoxy resin.

The above non-halogen-based flame retardant may be, for example, a phosphorus-based flame retardant, a nitrogen-based flame retardant, a silicon-based flame retardant, an inorganic flame retardant, or an organometallic flame retardant, and the use thereof is not limited, in which these flame retardants may be used individually, or in a plurality of the same type flame retardants or in combination of the different type flame retardants.

As the phosphorus-based flame retardant, either inorganic phosphorus or organic phosphorus compounds may be used. As the inorganic compounds, for example, red-phosphorous, ammonium phosphates such as ammonium phosphate, ammonium phosphate dibasic, ammonium phosphate tribasic, or poly ammonium phosphate, inorganic nitrogen-containing compounds such as amide phosphate may be used.

The red-phosphorous is preferably one that is subject to surface treatment for the purpose of preventing hydrolysis and so on, and as a method of the surface treatment, there may be mentioned, for example, (i) a method in which red phosphorus is coated with a film of an inorganic compound such as magnesium hydroxide, aluminum hydroxide, zinc hydroxide, titanium hydroxide, bismuth hydroxide, bismuth nitrate, or a mixture thereof, (ii) a method in which red phosphorus is coated with a film of a mixture of an inorganic compound such as magnesium hydroxide, aluminum hydroxide, zinc hydroxide, or titanium hydroxide with a thermosetting resin, and (iii) a method in which red phosphorus is coated with a film of an inorganic compound such as magnesium hydroxide, aluminum hydroxide, zinc hydroxide, titanium hydroxide, and then coated with a film of thermosetting resin thereon.

The above organic phosphorus compounds may be, for example, widely used organic phosphorus compounds such as phosphate ester compounds, phosphonic acid compounds, phosphinic acid compounds, phosphine oxide compounds, phosphorane compounds, or organic nitrogen-containing phosphorus compounds, or cyclic organic phosphorus compounds such as 9,10-dihydro-9-oxa-10-phosphaphenathrene-10-oxides, 10-(2,5-dihydrooxyphenyl)-10H-9-oxa-10-phosphaphenathrene-10-oxides, or 10-(2,7-dihydrooxynaphthyl)-10H-9-oxa-10-phosphaphenathrene-10-oxides, and a derivative which is obtained from reacting these with a compound such as epoxy resin or phenol resin.

The amount of the non-halogen-based flame retardant to be combined is suitably selected according to the kind of the phosphorus-based flame retardant, other components of the epoxy resin composition, and required degree of flame retardancy, and for example, when red- phosphorus is used as the non-halogen-based flame retardant, it is preferably in a range of 0.1 to 2.0 parts by weight in 100 parts by weight of the epoxy resin composition in which all of the epoxy resin, the curing agent, the non-halogen-based flame retardant and other filler or additives are combined, and when the organic phosphorus compounds are used, it is preferably in a range of 0.1 to 10.0 parts by weight, and more preferably in a range of 0.5 to 6.0 parts by weight.

When the above phosphorus-based flame retardant is used, hydrotalcite, magnesium hydroxide, boron compounds, zirconium oxide, black dyes, calcium carbonate, zeolite, zinc molybdate, or active carbon may be combined with the phosphorus-based flame retardant.

As the above nitrogen-based flame retardant, for example, triazine compounds, cyanuric acid compounds, isocyanuric acid compounds, or phenothiazine, and among these, triazine compounds, cyanuric acid compounds, isocyanuric acid compounds are preferable.

As the above triazine compounds, there may be mentioned, for example, melamine, acetoguanamine, benzoguanamine, melon, melam, saccinoguanamine, ethylenemelamine, polymelamine phosphate, or triguanamine, and for example, (i) aminotriazine sulfate compounds such as guanylmelamine sulfate, melem sulfate, or melam sulfate, (ii) co-condensed compounds of phenols such as phenol, cresol, xylenol, butyl phenol, or nonyl phenol, or melamines such as melamine, benzoguanamine, acetoguanamine, or formguanamine, with formaldehyde, (iii) a mixture of the co-condensed compounds of the above (ii) with phenol resins such as phenol formaldehyde condensed compounds, (iv) one that the above (ii) or (iii) is further modified with wood oil or isomerized armani oil.

Specific examples for the above cyanuric acid compounds may be, for example, cyanuric acid, or melamine cyanurate.

The amount of the nitrogen-based flame retardant to be combined is suitably selected according to the kind of the nitrogen-based flame retardant, other components of the epoxy resin composition, and required degree of flame retardancy, and for example, it is preferably in a range of 0.05 to 10 parts by weight, and more preferably in a range of 0.1 to 5 parts by weight, in 100 parts by weight of the epoxy resin composition in which all of the epoxy resin, the curing agent, the non-halogen-based flame retardant and other filler or additives are combined.

When the above nitrogen-based flame retardant is used, metal hydroxides, or molybdenum compounds may be combined together.

As the above silicon-based flame retardant, silicon atom-containing organic compounds can be used without particular limitation, and, for example, there may be mentioned silicone oil, silicone rubber, or silicone resin.

The amount of the above silicon-based flame retardant to be combined is suitably selected according to the kind of the silicon-based flame retardant, other components of the epoxy resin composition, and required degree of flame retardancy, and for example, it is preferably in a range of 0.05 to 20 parts by weight in 100 parts by weight of the epoxy resin composition in which all of the epoxy resin, the curing agent, the non-halogen-based flame retardant and other filler or additives are combined. When the above silicon-based flame retardant is used, molybdenum compounds, or alumina may be combined together.

As the above inorganic flame retardant, there may be mentioned, for example, metal hydroxides, metal oxides, metal carbonate compounds, metal powder, boron compounds, or low-melting point glass.

Specific examples for the above metal hydroxides may be, for example, aluminum hydroxide, magnesium hydroxide, dromite, hydrotalcite, calcium hydroxide, barium hydroxide, or zirconium hydroxide.

Specific examples for the above metal oxides may be, for example, zinc molybdate, molybdenum trioxide, zinc tartrate, tin oxide, aluminum oxide, iron oxide, titanium oxide, manganese oxide, zirconium oxide, zinc oxide, molybdenum oxide, cobalt oxide, bismuth oxide, chromium oxide, nickel oxide, copper oxide or tungsten oxide.

Specific examples for the above metal carbonate compounds may be, for example, zinc carbonate, magnesium carbonate, calcium carbonate, barium carbonate, magnesium carbonate basic, aluminum carbonate, iron carbonate, cobalt carbonate, or titanium carbonate.

Specific examples for the above metal powder may be, for example, aluminum, iron, titanium, manganese, zinc, molybdenum, cobalt, bismuth, chromium, nickel, copper, tungsten, or tin.

Specific examples for the above boron compounds may be, for example, zinc borate, zinc metaborate, barium metaborate, boric acid, or sodium borate.

Specific examples for the above low-melting point glass may be, for example, glasses such as Sipri (manufactured by Bauxite-Brown Corp.), SiO₂-MgO-H₂O, PbO-B₂O₃, ZnO-P₂O₅-MgO, P₂O₅-B₂O₃-PbO-MgO, P-Sn-O-F, PbO-V₂O₅-TeO₂ or Al₂O₃-H₂O based hydrated glasses; or boron silicate based glasses.

The amount of the above inorganic flame retardant to be combined is suitably selected according to the kind of the inorganic flame retardant, other components of the epoxy resin composition, and required degree of flame retardancy, and for example, it is preferably in a range of 0.05 to 20 parts by weight and more preferably in a range of 0.5 to 15 parts by weight, in 100 parts by weight of the epoxy resin composition in which all of the epoxy resin, the curing agent, the non-halogen-based flame retardant and other filler or additives are combined.

Examples for the above organometallic flame retardant may be, for example, ferrocene, acetylacetonate metal complexes, organometallic carbonyl compounds, cobalt organic salt compounds, metal sulfonic acid salts, compounds where metal atom and aromatic compound or heterocyclic compound are bonded in an ionic bonding or coordination bonding.

The amount of the above organometallic flame retardant to be combined is suitably selected according to the kind of the organometallic flame retardant, other components of the epoxy resin composition, and required degree of flame retardancy, and for example, it is preferably in a range of 0.005 to 10 parts by weight in 100 parts by weight of the epoxy resin composition in which all of the epoxy resin, the curing agent, the non-halogen-based flame retardant and other filler or additives are combined.

The epoxy resin composition of the present invention may comprise inorganic filler if necessary. Examples for the above inorganic filler may be, for example, fused silica, crystalline silica, alumina, silicon nitride, aluminum nitride and the like in the application of a semiconductor encapsulating material, and a conductive filler such as silver powder, copper powder and so on may be mentioned in the application of conductive pastes.

Here, when the epoxy resin composition is used as the semiconductor encapsulating material, the amount of the inorganic filler is in the range of 70 to 95 weight% of the filler per 100 parts by weight of the epoxy resin composition, as described above, but among this range, particularly preferable in 80 to 95 weight% in order to enhancing flame retardancy, humidity resistance or lead-solder crack resistance. When the inorganic filler is contained in the ratio of 80 to 95 weight%, the inorganic filler is preferably fused silica. The fused silica may be used in either crushed form or spherical form., but in order to enhance the mixing ratio of fused silica and prevent an increase in the melt viscosity of the molding material, it is preferable that spherical fused silica be mainly used. Further, in order to enhance the mixing ratio of spherical silica, the inorganic filler is preferably prepared such that the distribution of particle size of spherical silica is properly controlled.

A process for producing the semiconductor encapsulating material of the present invention from the epoxy resin composition may be mentioned in which each component described above and further the other additives are thoroughly mixed by means of an extruder, kneader, roll or the like until a uniform mixture is obtained, to provide the epoxy resin composition. As for molding a semiconductor package, the semiconductor encapsulating material is molded by using a mold, a transfer molder, an extrusion molder or the like and then heated at a temperature between 50 and 200°C for 2 to 10 hours, so that a semiconductor package as a molded product can be obtained.

The epoxy resin composition of the present invention may be used for example, for composition used for underfilling materials, conductive pastes, laminate sheets, electronic circuit boards and so on, and coating materials such as resin mold materials, adhesives, dielectric interlayer materials for build-up board, dielectric coatings and so on. Among the above various kinds of uses, the epoxy resin composition of the present invention may be suitably used for the semiconductor encapsulating material and the underfilling materials, particularly for the semiconductor encapsulating material.

In order to process the epoxy resin composition of the present invention into a composition for a printed circuit board, the epoxy resin composition may form, for example, a prepreg. It is preferable that the epoxy resin composition is varnished by using an organic solvent to form a prepreg, although no solvent is used according to the viscosity of the epoxy resin composition. As the above organic solvent, polar solvents with a boiling point of at most 160°C such as methyl ethyl ketone, acetone, dimethyl formamide and the like are preferably used, which may be used individually or as a mixture solvent of 2 or more kinds. The obtained varnish-like composition can be allowed to penetrate in a reinforcing base material of various kinds such as paper, glass fiber, glass nonwoven fiber, aramid paper, aramid fiber, glass mat, or glass roving fiber, and then heated at a temperature according to the used solvent, preferably at 50 to 170°C, to obtain the prepreg as the cured article. A ratio of the resin composition and the reinforcing base material to be used is not particularly limited but it is preferable that the resin proportion in the prepreg is prepared to be commonly 20 to 60 weight%. When a copper-coated laminate sheet is prepared using the epoxy resin composition, the thus-obtained prepreg can be laminated by a common method and properly laminated with a copper thin film, followed by heat-pressing at a temperature between 170 and 250°C under a pressure of 1 to 10 MPa for 10 minutes to 3 hours, to obtain the copper-coated laminate sheet.

When the epoxy resin composition of the present invention is used as a conducting paste, there may be mentioned by, for example, a method to be used as a composition for an isotropic conducting film, or a method to be used as a paste resin composition for a circuit connection or an isotropic conducting adhesive which is a liquid phase at room temperature, by dispersing fine conductive particles in the epoxy resin composition.

In order to obtain an interlayer dielectric material for a build-up board from the epoxy resin composition of the invention, for example, the curable resin composition properly combined with rubber, or filler is coated on a circuit-formed wiring board using a spray coating method, a curtain method or the like and then cured. Then, after making a hole such as a through hole part if necessary, the thus-obtained material is treated with a chemical roughening agent and the surface thereof is washed with hot water so as to form a bump, and then subjected to plating a metal such as copper or the like. As a method of plating described above, non-electrolytic plating and electrolytic plating are preferred, and as the roughening agent, there may be mentioned an oxidizing agent, alkali, or organic solvents. These operations are repeated in order according to the purpose, so as to alternatively build up a dielectric resin layer and a conductor layer of the purposed circuit pattern, by which the build-up board can be obtained. Provided that making the through hole part is carried out after forming the dielectric resin layer of the outermost layer. The resin-adhered copper thin film where the resin composition is half-cured on the copper thin film is heat-pressed at a temperature between 170 and 250°C to form a rough surface, by which the build-up board can be manufacture by omitting the process of plating treatment.

The epoxy resin composition of the present invention may be also used as a resist ink. In this case, there may be mentioned a method in which the epoxy resin is combined with a vinylic monomer having ethylenically unsaturated double bond, and a cationic polymerization catalyst as the curing agent, and further added with pigment, talc and filler to form a resist ink composition, and the composition is coated on a printed board by a screen printing method then to obtain a resist ink cured article.

The epoxy resin composition of the present invention may further comprise various compounding agents such as silane coupling agent, release agent, emulsifier or pigment incorporated therein, according to various kinds of the application described above.

The epoxy resin composition of the present invention can be cured by common methods according to the purpose or uses so as to obtain the cured article. In this case, it is preferred that a method of obtaining the cured article in which the epoxy resin composition of the present invention preferably is added with various compounding agents and then properly added with a curing accelerator, and the obtained composition is heated in a temperature range of about 20 to 250°C. A molding method can be employed as a general method for the epoxy resin composition. The thus-obtained cured article forms laminated product, casted product, adhesive layer, coated film, or film.

### EXAMPLES

The present invention will be described in detail with reference to the following-examples and comparative examples, but the invention should not be construed as being limited thereto. All the "parts" and "%" are given based on weight unless otherwise indicated. A melt viscosity at 150°C, a softening point measurement, GPC measurement and MS spectra were measured at the following conditions.

1) A melt viscosity at 150°C: based on ASTM D4287.
2) A method of measuring a melting point: DSC822e manufactured by Mettler, temperature-raising speed: 3°C /min.
3) GPC:
   - Instrument: HLC-8220 GPC, manufactured by Toso Co., Ltd., column: TSK-GEL G2000HXL + G2000HXL + G3000HXL + G4000HXL, manufactured by Toso Co., Ltd.
   - Solvent: tetrahydrofuran
   - Flow rate: 1 ml/min
   - Detector: RI
4) MS: Double-focusing mass spectrometer AX505H (FD505H), manufactured by Japan Electronics Co., Ltd.

### EXAMPLE 1 [Synthesis of phenol resin (a-1)]

In a flask equipped with a thermometer, a dropping funnel, a condenser, a fractional distillation column and an agitator was placed 160g (1.0 mole) of 2,7-dihydroxynaphthalene represented by the following formula and heated at 200°C with stirring and purging nitrogen gas to be melted:

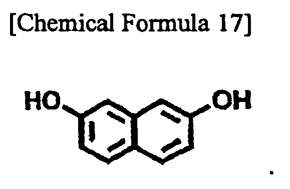

After melting, 23g (0.2 mol) of 48% potassium hydroxide aqueous solution was added. Then, water derived from the 48% potassium hydroxide aqueous solution and water to be produced was taken out by using the fractional distillation column, and then the reaction was again performed for 5 hours. After the termination of the reaction, methyl isobutyl ketone 1000g was further added for dissolution, and then transferred to the separatory funnel. Subsequently, the solution was washed with water until the washed water became neutral, and the solvent was removed from the organic layer by heating under a reduced pressure to obtain 150g of the phenol resin (1). The obtained phenol resin (a-1) was a brown solid, the hydroxyl equivalent was 120g/eq and the melting point was 179°C.

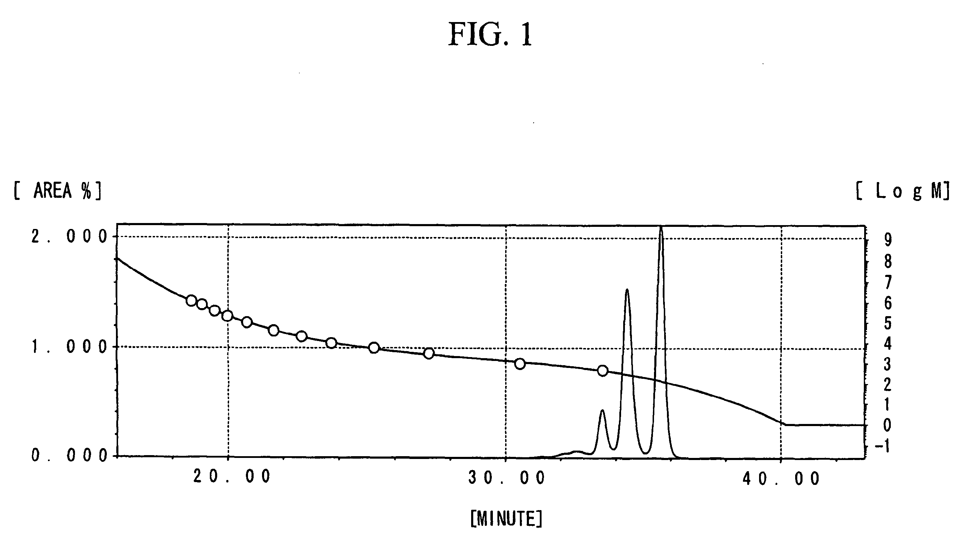

The remaining proportion of the un-reacted raw material (2,7-dihydroxynaphthalene) was confirmed to be 64% as an area ratio by the GPC from the GPC chart shown in FIG 1.

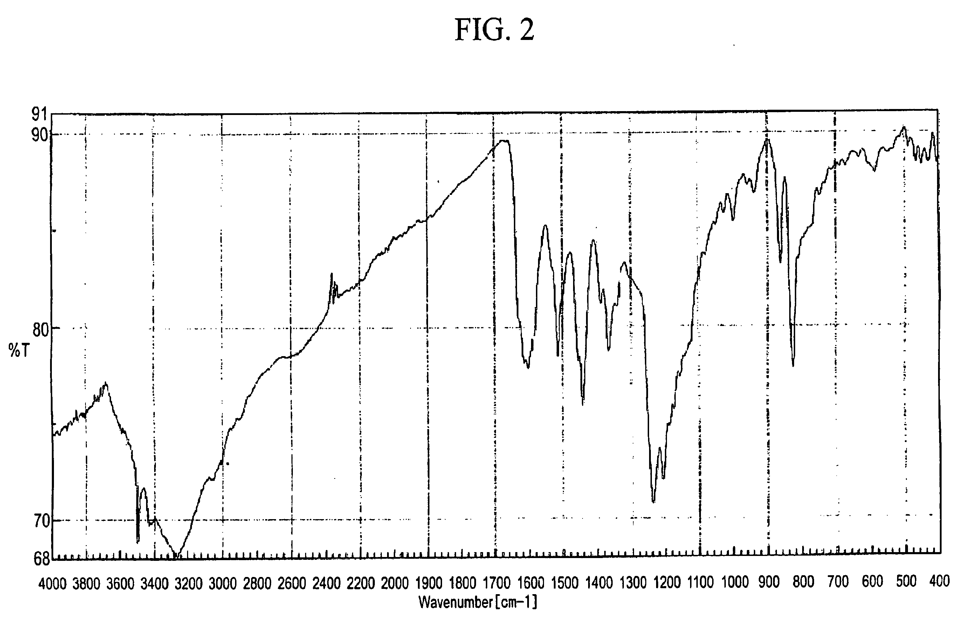

From the results shown in the FT-IR chart shown in FIG2, it was confirmed that the absorption (1250cm⁻¹) derived from aromatic ether was newly generated in comparison with the raw material (2,7-dihydroxynaphthalene), and thus it was assumed that dehydrative etherification between the hydroxyl groups occurred.

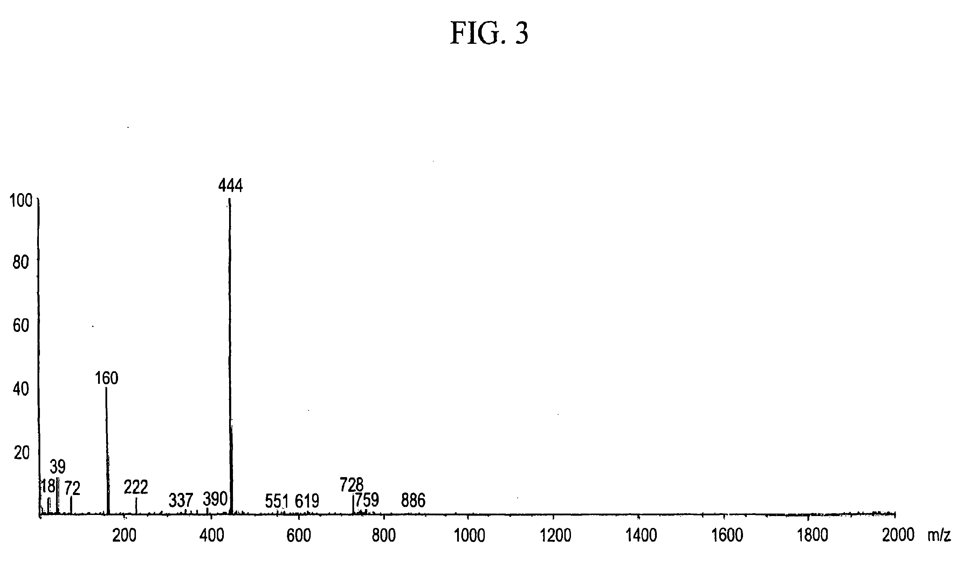

From the results shown in the FD-MS chart shown in FIG.3, there were confirmed 2,7-dihydroxynaphthalene trimeric structure (Mw: 444) synthesized by dehydration of 3 molecules of 2,7-dihydroxynaphthalene, and 2,7-dihydroxynaphthalene pentameric structure (Mw: 728) synthesized by dehydration of 5 molecules of 2,7-dihydroxynaphthalene.

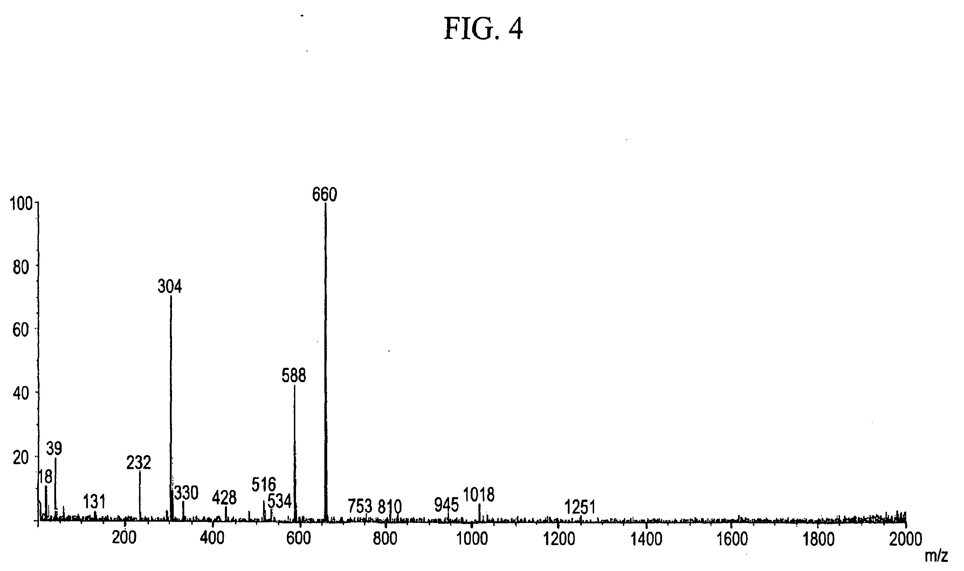

From the FD-MS by the trimethylsilylation method shown in FIG 4, there were confirmed the peak (M⁺=588) which results from adding 2 units of the molecular weight (Mw: 72) of the trimethylsilyl group portion to 2,7-dihydroxynaphthalene trimeric structure (Mw: 444) and the peak (M⁺= 660) which results from adding 3 units of the molecular weight (Mw: 72) of the trimethylsilyl group portion to 2,7-dihydroxynaphthalene trimeric structure (Mw: 444).

There were confirmed the peak (M⁺=945) which results from adding 3 units of the molecular weight (Mw: 72) of the trimethylsilyl group portion to 2,7-dihydroxynaphthalene pentameric structure (Mw: 728) synthesized by dehydration of 5 molecules of 2,7-dihydroxynaphthalene and the peak (M⁺= 1018) which results from adding 4 units of the molecular weight (Mw: 72) of the trimethylsilyl group portion to 2,7-dihydroxynaphthalene pentameric structure (Mw: 728).

From the above, it was interpreted that the phenol resin (a-1), in which the content of 2,7-dihydroxynaphthalene of the raw material is 64% as the area ratio by GPC with respect to the total resin, contains 2,7-dihydroxynaphthalene trimeric ether compound represented by the following structural formula: 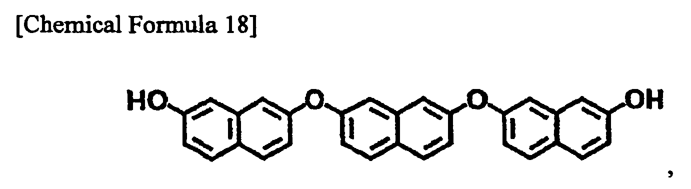 A trimeric compound represented by the following structural formula, which was synthesized by dehydration of 1 molecular nucleus of 2,7-dihydroxynaphthalene with 2,7-dihydroxynaphthalene dimeric ether: 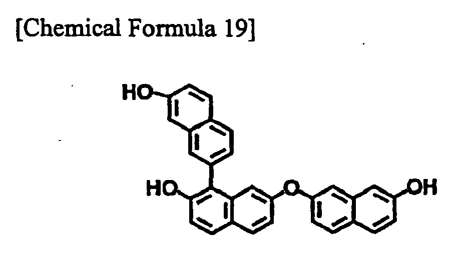 and
a pentameric compound represented by the following structural formula: 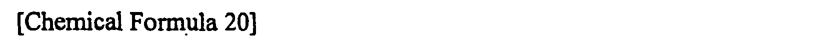 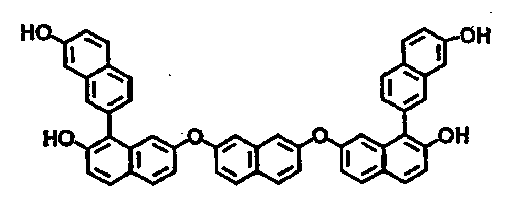 which was synthesized by dehydration of 2 molecular nuclei of 2,7-dihydroxynaphthatenes with 2,7-dihydroxynaphthalene trimeric ether.

### EXAMPLE 2 [Synthesis of phenol resin (a-2)]

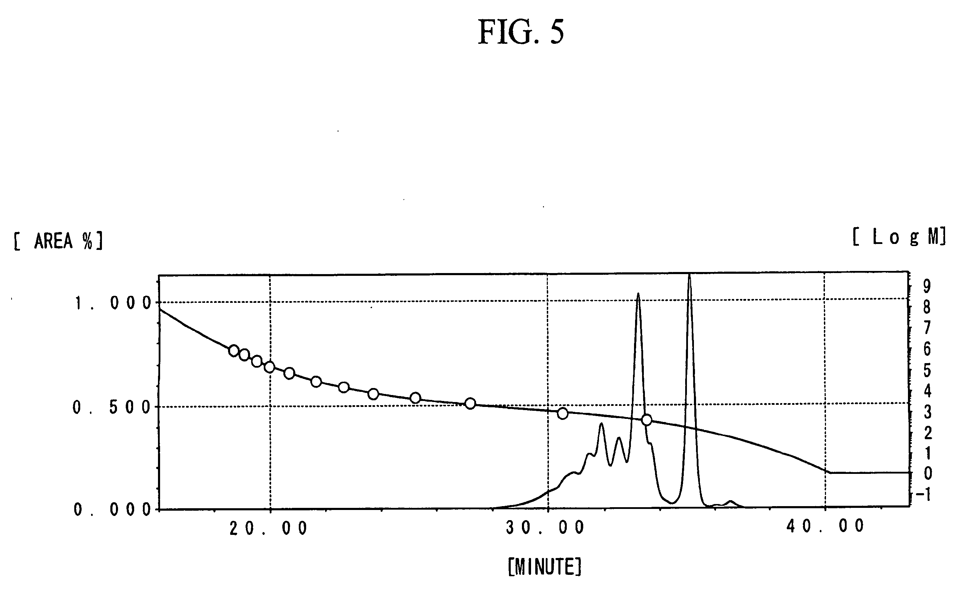

147g of the phenol resin (a-2) was obtained in the same manner as in Example 1, with the exception that the 2,7-dihydroxynaphthalene 160g in Example 1 was changed to 1,6-dihydroxynaphthalene 160g. The obtained phenol resin (a-2) was a brown solid and had hydroxyl group equivalent of 135g/eq and melting point of 137°C. From the GPC chart in FIG. 5, the remaining proportion of the un-reacted raw material (1,6-dihydroxynaphthalene) was confirmed to be 24% as an area ratio by GPC.

### EXAMPLE 3 [Synthesis of phenol resin (a-3)]

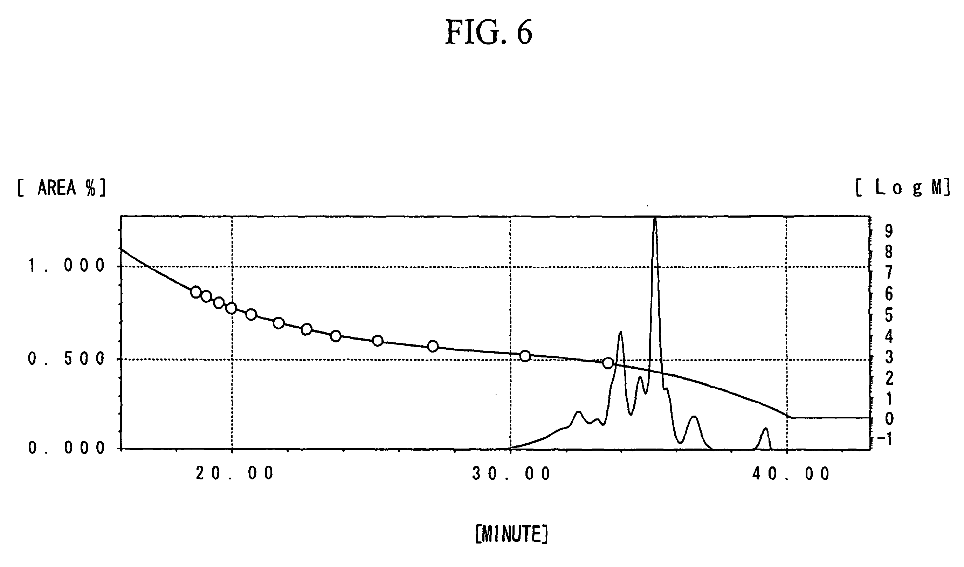

125g of the phenol resin (a-3) was obtained in the same manner as in Example 1, with the exception that the 2,7-dihydroxynaphthalene 160g in Example 1 was changed to a mixture of 2,7-dihydroxynaphthalene 80g (0.5 mol) and 1,3-dihydroxybenzene 55g (0.5 mol). The obtained phenol resin (a-3) was a brown solid and had hydroxyl group equivalent of 101g/eq and melting point of 136°C. From the GPC chart in FIG 6, the remaining proportion of the un-reacted raw material (the sum of 2,7-dihydroxynaphthalene and 1,3-dihydroxybenzene) was confirmed to be 36% as an area ratio by GPC,

### EXAMPLE 4 [Synthesis of phenol resin (a-4)]

100g of the phenol resin (a-4) was obtained in the same manner as in Example 1, with the exception that the 2,7-dihydroxynaphthalene 160g in Example 1 was changed to 1,3-dihydroxybenzene 110 g (1.0 mol). The obtained phenol resin (a-4) was brown solid and had hydroxyl group equivalent of 85g/eq and melting point of 122°C. From the GPC chart, the remaining proportion of the un-reacted raw material (1,3-dihydroxybenzene) was confirmed to be 36% as an area ratio by GPC.

### EXAMPLE 5 [Synthesis of phenol resin (a-5)]

In a flask equipped with a thermometer, a dropping funnel, a condenser, a fractional distillation column and an agitator was placed 160g (1.0 mole) of 2,7-dihydroxynaphthalene represented by the following formula and benzyl alcohol 80g and heated at 200°C with stirring and purging nitrogen gas to be melted:

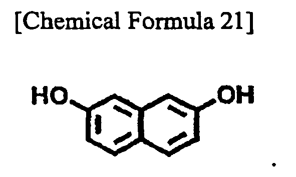

After melting, 23g (0.2 mol) of 48% potassium hydroxide aqueous solution was added. Then, water derived from the 48% potassium hydroxide aqueous solution and water to be produced was taken out by using the fractional distillation column, and then the reaction was again performed for 15 hours. After the termination of the reaction, water 1000g was further added, and precipitate is filtered, after washed with water, it was dried under a reduced pressure, to obtain 147g of the phenol resin (a-5) of the present invention. The obtained phenol resin (a-5) was a brown solid, the hydroxyl equivalent was 154g/eq and the melting point was 182°C. The remaining proportion of the un-reacted raw material (2,7-dihydroxynaphthalene) was confirmed to be 32% as an area ratio by the GPC from the GPC chart.

### EXAMPLE 6 [Synthesis of epoxy resin (b-1)]

In a flask equipped with a thermometer, a dropping funnel, a condenser, and an agitator were placed 120g of the phenol resin (a-1) obtained in Example 1, epichlrohydrin 463g (5.0 mol), n-butanol 139g and tetraethylbenzyl ammonium chloride 2g and dissolved. After raising a temperature to 65°C and then reducing the pressure to the azeotropic pressure, 90g (1.1 mol) of 49% sodium hydroxide aqueous solution was added dropwise to the solution over 5 hours. Then, the solution was continuously stirred for 0.5 hour at the same condition. During this period, the reaction was carried out while the portion distilled out by azeotropic boiling was separated by a Dean-Stark trap, then, the aqueous layer was removed and the organic layer was recycled into the reaction system. Then, the un-reacted epichlrohydrian was distilled off by evaporation under a reduced pressure. Next, methyl isobutyl ketone 432g and n-butanol 130g was further added to the crude epoxy resin thus-obtained and dissolved. Again, 10g of 10% sodium hydroxide aqueous solution was added to this solution and reacted at 80°C for 2 hours, and the solution was washed 3 times with water of 150g until pH of the washed water became neutral. Then, after the system inside was dehydrated by azeotropic boiling and subject to precision filtration, the solvent was distilled off by evaporation under a reduced pressure, to obtain 170 g of the epoxy resin (referred to as "epoxy resin (b-1)" in abbreviation, below). The obtained epoxy resin (b-1) had a melt viscosity at 150°C of 0.5 dPa·s and epoxy equivalent of 187g/eq.

### COMPARATIVE EXAMPLE 1 [Synthesis of phenol resin (a'-1)]

100g of the phenol resin (a'-1') was obtained in the same manner as in Example 1, with the exception that the 48% potassium hydroxide aqueous solution in Example 1 was changed to para-toluenesulfonic acid hydrate 2g. As the same as Example 1, phenol resin (a'-1) was obtained for comparative example. The obtained phenol resin (a'-1) was brown solid and had hydroxyl group equivalent of 183g/eq and the decomposition temperature is 250°C because melting point can not be determined.

### EXAMPLES 7 to 14 and COMPARATIVE EXAMPLES 2 to 6

As epoxy resin, using YX-4000H (tetramethylbiphenol-type epoxy resin, epoxy equivalent: 195 g/eq) manufactured by Japan EpoxyResin Co., Ltd., NC-3000 (biphenyl aralkyl type, epoxy equivalent: 277g/eq) manufactured by Nippon Kayaku Co., Ltd. and N-665-EXP (cresol novolac type epoxy resin, epoxy equivalent: 203g/eq) manufactured by Dainippon Ink and Chemicals, Inc., and the above-mentioned epoxy resin (b-1); as a curing agent, using phenol resins (a-1)~(a-5), (a'-1) and Mirex XLC- 3 L (phenolaralkyl resin, hydroxyl group equivalent: 176g/eq) manufactured by Mitsui Chemicals, Inc. ; these were combined with triphenylphosphine (TPP) as a curing accelerator, a condensed phosphoric acid ester (PX-200, manufactured by Daihachi. Chemical Industry Co., Ltd.) as a flame retardant, magnesium hydroxide (Z-10 manufactured by Air Water Co., Ltd.), a spheral fused silica (S-COL, manufactured by Micron Co., Ltd.) as an inorganic filler, γ-glycidoxy triethoxysilane (KBM-403, manufactured by Shin Etsu Chemical Co., Ltd.) as a silane coupling agent, carnauba wax (PEARL WAX No.1-P, manufactured by Cerarica Noda Co., Ltd.), and carbon black, according to the formulation set forth in Tables 1 and 2, and subject to melt-kneading using 2 rolls at 100°C for 10 minutes, to obtain the purposed composition. For the obtained composition, the gel time was measured by the following method to test the curability. Further, after this composition was press-molded at 180°C for 10 minutes and further cured at 180°C for 5 hours, a test specimen of 1.6 mm thickness was prepared from the cured article thus-obtained according to the UL-94 test method and properties of the cured article were confirmed by the following method.

Gel time: The epoxy resin 0.15g was loaded on a cure plate (manufactured by Thermo Electric Co., Ltd.) heated to 175°C and the system observation started by using a stopwatch. The sample was uniformly stirred at the end of the rod, and the stopwatch stopped when the sample was broken in a form of thread, which was left on the plate. The time consumed until this sample was broken to be left on the plate was set as the gel time.

Flame retardancy: The 5 specimens of 1.6mm thickness prepared by the UL-94 test method were subject to a combustion test.

Glass transition temperature: it was measured using a viscoelasticity measuring instrument (RSAII manufactured by Rheometrics Co., Ltd., double Cantilever method: frequency of 1 Hz, temperature-raising velocity of 3°C /min).

[TABLE 1]

**TABLE 1. The table of the formulation (weight parts) of the epoxy resin composition and the evaluation results**

| | | Examples | | | | | | | |
|---|---|---|---|---|---|---|---|---|---|
| | | 7 | 8 | 9 | 10 | 11 | 12 | 13 | 14 |
| Epoxy Resin | YX-4000H | | | | | | 42 | 42 | |
| | NC-3000 | 93 | 90 | 98 | 103 | 86 | | | |
| | N-665-EXP | | | | | | 42 | 42 | |
| | (b-1) | | | | | | | | 82 |
| Phenol Resin | (a-1) | 41 | | | | | 50 | 50 | 52 |
| | (a-2) | | 44 | | | | | | |
| | (a-3) | | | 36 | | | | | |
| | (a-4) | | | | 31 | | | | |
| | (a-5) | | | | | 48 | | | |
| Condensed phosphoric acid ester | | | | | | | 30 | | |
| Magnesium hydroxide | | | | | | | | 20 | |
| TPP | | 3 | 3 | 3 | 3 | 3 | 3 | 3 | 3 |
| Fused silica | | 850 | 850 | 850 | 850 | 850 | 850 | 850 | 850 |
| Coupling agent | | 5 | 5 | 5 | 5 | 5 | 5 | 5 | 5 |
| Carnauba wax | | 5 | 5 | 5 | 5 | 5 | 5 | 5 | 5 |
| Carbon black | | 3 | 3 | 3 | 3 | 3 | 3 | 3 | 3 |
| Gel time (sec) | | 34 | 33 | 25 | 27 | 38 | 37 | 38 | 32 |
| Combustion test class | | V-0 | V-0 | V-0 | V-0 | V-0 | V-0 | V-0 | V-0 |
| 1* | | 4 | 5 | 5 | 8 | 3 | 9 | 8 | 2 |
| 2* | | 15 | 17 | 19 | 37 | 12 | 45 | 43 | 10 |
| Glass transition temperature | | 155 | 150 | 152 | 146 | 179 | 146 | 145 | 190 |

[TABLE 2]

**Table 2. The table of the formulation (weight parts) of the epoxy resin composition and the evaluation results**

| | | Comparative Examples | | | | |
|---|---|---|---|---|---|---|
| | | 2 | 3 | 4 | 5 | 6 |
| Epoxy Resin | XY-4000H | | 35 | | 36 | 36 |
| | NC-3000 | 81 | | 82 | | |
| | N-665EXP | | 35 | | 36 | 36 |
| Phenol Resin | (a'-1) | 53 | 64 | | | |
| | XLC-3L | | | 52 | 62 | 62 |
| Condensed phosphoric acid ester | | | | | 30 | |
| Magnesium hydroxide | | | | | | 20 |
| TPP | | 3 | 3 | 3 | 3 | 3 |
| Fused silica | | 850 | 850 | 850 | 850 | 850 |
| Coupling agent | | 5 | 5 | 5 | 5 | 5 |
| Carnauba wax | | 5 | 5 | 5 | 5 | 5 |
| Carbon black | | 3 | 3 | 3 | 3 | 3 |
| Gel time (sec) | | No gelation | | 27 | 42 | 42 |
| Combustion test class | | Cured Article can n ot be obtained | | V-1 | V-1 | V-1 |
| 1* | | | | 20 | 27 | 25 |
| 2* | | | | 93 | 160 | 154 |
| Glass transition temperature | | | | 130 | 122 | 119 |

| | | | | | | |
|---|---|---|---|---|---|---|
| Notes of Table 1: * 1: the maximum combustion time in contact with a flame at one time (sec), * 2: the total combustion time of the 5 test specimens (sec), Self-extinguish: although flame retardancy (ΣF≤250 sec and Fₘₐₓ≤30 sec) required in V-1 was not satisfied, the combustion flame is extinguished before reaching the position of the fixing clamp. | | | | | | |

### INDUSTRIAL APPLICABILITY

According to the present invention, the method of producing a phenol resin which can be used to manufacture polyarylene ether of low melt viscosity by extremely simple and easy method industrially without special aftertreatment or complicated multistep reaction after polymerization, and the method of producing epoxy resin from the phenol resin obtained by the above-mentioned method, can be provided.

## Claims

1. A method of producing a phenol resin having polyarylene ether structure, comprising a step of reacting polyvalent hydroxyaromatic compound (A) having two or more phenolic hydroxyl groups per molecule in the presence of a basic catalyst (B) by dehydration condensation reaction,
wherein the basic catalyst (B) is sodium hydroxide, potassium hydroxide, sodium carbonate, potassium carbonate, or triphenyl phosphine.

2. The method of producing a phenol resin having polyarylene ether structure according to claim 1, wherein the polyvalent hydroxyaromatic compound (A) having two or more phenolic hydroxyl groups per molecule is a compound selected from the group consisting of 1,3-dihydroxynaphthalene, 1,6-dihydroxynaphthalene, 1,8-dihydroxynaphthalene, 2,7-dihydroxynaphthalene, 1,3-dihydroxybenzene, 5-phenyl-1,3-dihydroxybenzene, 1,2,3-trihydroxybenzene, and 1,3,6- trihydroxybenzene.

3. The method of producing a phenol resin having polyarylene ether structure according to claim 1, wherein the polyvalent hydroxyaromatic compound (A) having two or more phenolic hydroxyl groups per molecule is a dihydroxynaphthalene (a1).

4. The method of producing a phenol resin having polyarylene ether structure according to claim 1, wherein the polyvalent hydroxyaromatic compound (A) having two or more phenolic hydroxyl groups per molecule is a dihydroxybenzene (a2).

5. The method of producing a phenol resin having polyarylene ether structure according to claim 1, wherein the polyvalent hydroxyaromatic compound (A) having two or more phenolic hydroxyl groups per molecule is a mixture of a dihydroxynaphthalene (a1) and a dihydroxybenzene (a2)

6. The method of producing a phenol resin having polyarylene ether structure according to claim 1, wherein the dehydration condensation reaction according to claim 1 is carried out in a temperature range of 100 to 300 °C.

7. A method of producing an epoxy resin having polyarylene ether structure, comprising the steps of
reacting polyvalent hydroxyaromatic compound (A) having two or more phenolic hydroxyl groups per molecule in the presence of a basic catalyst (B) by dehydration condensation reaction, and
reacting the phenol resin obtained by the previous step with a (methyl) epihalohydrin, wherein the basic catalyst (B) is sodium hydroxide, potassium hydroxide, sodium carbonate, potassium carbonate, or triphenyl phosphine.

8. The method of producing an epoxy resin having polyarylene ether structure according to claim 7, wherein the polyvalent hydroxyaromatic compound (A) having two or more phenolic hydroxyl groups per molecule is a compound selected from the group consisting of 1,3-dihydroxynaphthalene, 1,6-dihydroxynaphthalene, 1,8-dihydroxynaphthalene, 2,7-dihydroxynaphthalene, 1,3-dihydroxybenzene, 5-phenyl-1,3-dihydroxybenzene, 1,2,3-trihydroxybenzene, and 1,3,6- trihydroxybenzene.

9. The method of producing an epoxy resin having polyarylene ether structure according to claim 7, wherein the polyvalent hydroxyaromatic compound (A) having two or more phenolic hydroxyl groups per molecule is a dihydroxynaphthalene (a1).

10. The method of producing an epoxy resin having polyarylene ether structure according to claim 7, wherein the polyvalent hydroxyaromatic compound (A) having two or more phenolic hydroxyl groups per molecule is a dihydroxybenzene (a2).

11. The method of producing an epoxy resin having polyarylene ether structure according to claim 7,wherein the polyvalent hydroxyaromatic compound (A) having two or more phenolic hydroxyl groups per molecule is a mixture of a dihydroxynaphthalene (a1) and a dihydroxybenzene (a2).

12. The method of producing an epoxy resin having polyarylene ether structure according to claim 7, wherein the dehydration condensation reaction is carried out in a temperature range of 100 to 300 °C.

## Patentansprüche

1. Verfahren zur Herstellung eines Phenolharzes mit Polyarylenetherstruktur, umfassend einen Schritt des Umsetzens einer polyvalenten hydroxyaromatischen Verbindung (A), die zwei oder mehr phenolische Hydroxylgruppen pro Molekül hat, in Gegenwart eines basischen Katalysators (B) durch Dehydratisierungskondensationsreaktion,
wobei der basische Katalysator (B) Natriumhydroxid, Kaliumhydroxid, Natriumcarbonat, Kaliumcarbonat oder Triphenylphosphin ist.

2. Verfahren zur Herstellung eines Phenolharzes mit Polyarylenetherstruktur gemäß Anspruch 1, wobei die polyvalente hydroxyaromatische Verbindung (A), die zwei oder mehr phenolische Hydroxylgruppen pro Molekül hat, eine Verbindung ist, die ausgewählt ist aus der Gruppe, bestehend aus 1,3-Dihydroxynaphthalin, 1,6-Dihydroxynaphthalin, 1,8-Dihydroxynaphthalin, 2,7-Dihydroxynaphthalin, 1,3-Dihydroxybenzol, 5-Phenyl-1,3-Dihydroxybenzol, 1,2,3-Trihydroxybenzol und 1,3,6-Trihydroxybenzol.

3. Verfahren zur Herstellung eines Phenolharzes mit Polyarylenetherstruktur gemäß Anspruch 1, wobei die polyvalente hydroxyaromatische Verbindung (A), die 2 oder mehr phenolische Hydroxylgruppen pro Molekül hat, ein Dihydroxynaphthalin (a1) ist.

4. Verfahren zur Herstellung eines Phenolharzes mit Polyarylenetherstruktur gemäß Anspruch 1, wobei die polyvalente hydroxyaromatische Verbindung (A), die zwei oder mehr phenolische Hydroxylgruppen pro Molekül hat, ein Dihydroxybenzol (a2) ist.

5. Verfahren zur Herstellung eines Phenolharzes mit Polyarylenetherstruktur gemäß Anspruch 1, wobei die polyvalente hydroxyaromatische Verbindung (A), die zwei oder mehr phenolische Hydroxylgruppen pro Molekül hat, ein Gemisch aus einem Dihydroxynaphthalin (a1) und einem Dihydroxybenzol (a2) ist.

6. Verfahren zur Herstellung eines Phenolharzes mit Polyarylenetherstruktur gemäß Anspruch 1, wobei die Dehydratisierungskondensationsreaktion gemäß Anspruch 1 in einem Temperaturbereich von 100 bis 300°C durchgeführt wird.

7. Verfahren zur Herstellung eines Epoxidharzes mit Polyarylenetherstruktur, umfassend die Schritte eines Umsetzens einer polyvalenten hydroxyaromatischen Verbindung (A), die zwei oder mehr phenolische Hydroxylgruppen pro Molekül hat, in Gegenwart eines basischen Katalysators (B) durch Dehydratisierungskondensationsreaktion und
Umsetzen des durch den vorherigen Schritt erhaltenen Phenolharzes mit einem (Methyl)Epihalogenhydrin, wobei der basische Katalysator (B) Natriumhydroxid, Kaliumhydroxid, Natriumcarbonat, Kaliumcarbonat oder Triphenylphosphin ist.

8. Verfahren zur Herstellung eines Epoxidharzes mit Polyarylenetherstruktur gemäß Anspruch 7, wobei die polyvalente hydroxyaromatische Verbindung (A), die zwei oder mehr phenolische Hydroxylgruppen pro Molekül hat, eine Verbindung ist, die aus der Gruppe, bestehend aus 1,3-Dihydroxynaphthalin, 1,6-Dihydroxynaphthalin, 1,8-Dihydroxynaphthalin, 2,7-Dihydroxynaphthalin, 1,3-Dihydroxybenzol, 5-Phenyl-1,3-Dihydroxybenzol, 1,2,3-Trihydroxybenzol und 1,3,6-Trihydroxybenzol, ausgewählt wird.

9. Verfahren zur Herstellung eines Epoxidharzes mit Polyarylenetherstruktur gemäß Anspruch 7, wobei die polyvalente hydroxyaromatische Verbindung (A), die zwei oder mehr phenolische Hydroxylgruppen pro Molekül hat, ein Dihydroxynaphthalin (a1) ist.

10. Verfahren zur Herstellung eines Epoxidharzes mit Polyarylenetherstruktur gemäß Anspruch 7, wobei die polyvalente hydroxyaromatische Verbindung (A), die zwei oder mehr phenolische Hydroxylgruppen pro Molekül hat, ein Dihydroxybenzol (a2) ist.

11. Verfahren zur Herstellung eines Epoxidharzes mit Polyarylenetherstruktur gemäß Anspruch 7, wobei die polyvalente hydroxyaromatische Verbindung (A), die zwei oder mehr phenolische Hydroxylgruppen pro Molekül hat, ein Gemisch aus einem Dihydroxynaphthalin (a1) und einem Dihydroxybenzol (a2) ist.

12. Verfahren zur Herstellung eines Epoxidharzes mit Polyarylenetherstruktur gemäß Anspruch 7, wobei die Dehydratisierungskondensationsreaktion in einem Temperaturbereich von 100 bis 300°C durchgeführt wird.

## Revendications

1. Procédé de production d'une résine de phénol ayant une structure de poly(arylène éther) comprenant une étape consistant à faire réagir un composé hydroxyaromatique polyvalent (A) comportant deux groupes hydroxyle phénoliques ou plus par molécule en présence d'un catalyseur basique (B) par une réaction de condensation-déshydratation,
dans lequel le catalyseur basique (B) est l'hydroxyde de sodium, l'hydroxyde de potassium, le carbonate de sodium, le carbonate de potassium ou la triphénylphosphine.

2. Procédé de production d'une résine de phénol ayant une structure de poly(arylène éther) selon la revendication 1, dans lequel le composé hydroxyaromatique polyvalent (A) comportant deux groupes hydroxyle phénoliques ou plus par molécule est un composé choisi dans le groupe constitué par le 1,3-dihydroxynaphtalène, le 1,6-dihydroxynaphtalène, le 1,8-dihydroxynaphtalène, le 2,7-dihydroxynaphtalène, le 1,3-dihydroxybenzène, le 5-phényl-1,3-dihydroxybenzène, le 1,2,3-trihydroxybenzène et le 1,3,6-trihydroxybenzène.

3. Procédé de production d'une résine de phénol ayant une structure de poly(arylène éther) selon la revendication 1, dans lequel le composé hydroxyaromatique polyvalent (A) comportant deux groupes hydroxyle phénoliques ou plus par molécule est un dihydroxynaphtalène (a1).

4. Procédé de production d'une résine de phénol ayant une structure de poly(arylène éther) selon la revendication 1, dans lequel le composé hydroxyaromatique polyvalent (A) comportant deux groupes hydroxyle phénoliques ou plus par molécule est un dihydroxybenzène (a2).

5. Procédé de production d'une résine de phénol ayant une structure de poly(arylène éther) selon la revendication 1, dans lequel le composé hydroxyaromatique polyvalent (A) comportant deux groupes hydroxyle phénoliques ou plus par molécule est un mélange d'un dihydroxynaphtalène (a1) et d'un dihydroxybenzène (a2).

6. Procédé de production d'une résine de phénol ayant une structure de poly(arylène éther) selon la revendication 1, dans lequel la réaction de condensation-déshydratation selon la revendication 1 est réalisée dans une plage de températures allant de 100 à 300 °C.

7. Procédé de production d'une résine époxy ayant une structure de poly(arylène éther) comprenant les étapes consistant à
faire réagir un composé hydroxyaromatique polyvalent (A) comportant deux groupes hydroxyle phénoliques ou plus par molécule en présence d'un catalyseur basique (B) par une réaction de condensation-déshydratation, et
faire réagir la résine de phénol obtenue par l'étape précédente avec une (méthyl)épihalogénohydrine, dans lequel le catalyseur basique (B) est l'hydroxyde de sodium, l'hydroxyde de potassium, le carbonate de sodium, le carbonate de potassium ou la triphénylphosphine.

8. Procédé de production d'une résine époxy ayant une structure de poly(arylène éther) selon la revendication 7, dans lequel le composé hydroxyaromatique polyvalent (A) comportant deux groupes hydroxyle phénoliques ou plus par molécule est un composé choisi dans le groupe constitué par le 1,3-dihydroxynaphtalène, le 1,6-dihydroxynaphtalène, le 1,8-dihydroxynaphtalène, le 2,7-dihydroxynaphtalène, le 1,3-dihydroxybenzène, le 5-phényl-1,3-dihydroxybenzène, le 1,2,3-trihydroxybenzène et le 1,3,6-trihydroxybenzène.

9. Procédé de production d'une résine époxy ayant une structure de poly(arylène éther) selon la revendication 7, dans lequel le composé hydroxyaromatique polyvalent (A) comportant deux groupes hydroxyle phénoliques ou plus par molécule est un dihydroxynaphtalène (a1).

10. Procédé de production d'une résine époxy ayant une structure de poly(arylène éther) selon la revendication 7, dans lequel le composé hydroxyaromatique polyvalent (A) comportant deux groupes hydroxyle phénoliques ou plus par molécule est un dihydroxybenzène (a2).

11. Procédé de production d'une résine époxy ayant une structure de poly(arylène éther) selon la revendication 7, dans lequel le composé hydroxyaromatique polyvalent (A) comportant deux groupes hydroxyle phénoliques ou plus par molécule est un mélange d'un dihydroxynaphtalène (a1) et d'un dihydroxybenzène (a2).

12. Procédé de production d'une résine époxy ayant une structure de poly(arylène éther) selon la revendication 7, dans lequel la réaction de condensation-déshydratation est réalisée dans une plage de températures allant de 100 à 300 °C.
